# FASCICULE DE BREVET EUROPEEN

(11) **EP 3 041 309 B1**
(45) Date de publication et mention de la délivrance du brevet: **27.02.2019**
(21) Numéro de dépôt: 15202969.0
(22) Date de dépôt: 29.12.2015
(51) Int. Cl.: H04W 74/08, H04L 1/16, H04L 1/18, H04W 84/18

(54) **PROCÉDÉ ET PROTOCOLE D'ACCÈS DANS UN RÉSEAU AD HOC**
ZUGANGSVERFAHREN UND -PROTOKOLL IN EINEM AD-HOC-NETZ
ACCESS PROTOCOL AND METHOD IN AN AD HOC NETWORK

(30) Priorité: 30.12.2014 FR 1403024
(43) Date de publication de la demande: 06.07.2016
(73) Titulaire: THALES, 92400 Courbevoie (FR)
(72) Inventeur: ANOUAR, Hicham, 92622 Gennevilliers Cedex (FR)
(74) Mandataire: Dudouit, Isabelle

(56) Documents cités:
- US-A1- 2009 109 938
- SHENGMING JIANG ET AL: "A Simple Distributed PRMA for MANETs", IEEE TRANSACTIONS ON VEHICULAR TECHNOLOGY, IEEE SERVICE CENTER, PISCATAWAY, NJ, US, vol. 51, no. 2, 1 mars 2002 (2002-03-01), XP011080642, ISSN: 0018-9545
- FANG J C ET AL: "A synchronous, reservation based medium access control protocol for multihop wireless networks", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, vol. 2, 16 mars 2003 (2003-03-16), pages 994-998, XP010639903, DOI: 10.1109/WCNC.2003.1200507 ISBN: 978-0-7803-7700-4
- BIANCHI G: "Performance analysis of the IEEE 802.11 distributed coordination function", IEEE JOURNAL ON SELECTED AREAS IN COMMUNICATIONS, IEEE SERVICE CENTER, PISCATAWAY, US, vol. 18, no. 3, 1 mars 2000 (2000-03-01), pages 535-547, XP011449989, ISSN: 0733-8716, DOI: 10.1109/49.840210
- HICHAM ANOUAR ET AL: "Optimal Constant-Window Backoff Scheme for IEEE 802.11 DCF in Single-Hop Wireless Networks Under Finite Load Conditions", WIRELESS PERSONAL COMMUNICATIONS, KLUWER ACADEMIC PUBLISHERS, DO, vol. 43, no. 4, 19 juillet 2007 (2007-07-19), pages 1583-1602, XP019558036, ISSN: 1572-834X, DOI: 10.1007/S11277-007-9329-5

## Description

L'invention concerne un procédé de communication et un protocole d'accès au canal radio d'un réseau ad hoc. Elle s'applique au domaine des réseaux de communications sans fil ad hoc et définit notamment un protocole d'accès distribué au canal radio pouvant atteindre la capacité théorique maximale dans le régime asymptotique.

Les réseaux ad hoc sans fil mobiles sont caractérisés par l'absence d'infrastructure fixe et l'absence de visibilité mutuelle complète des noeuds rendant ainsi tout contrôle centralisé d'accès au canal inapproprié.

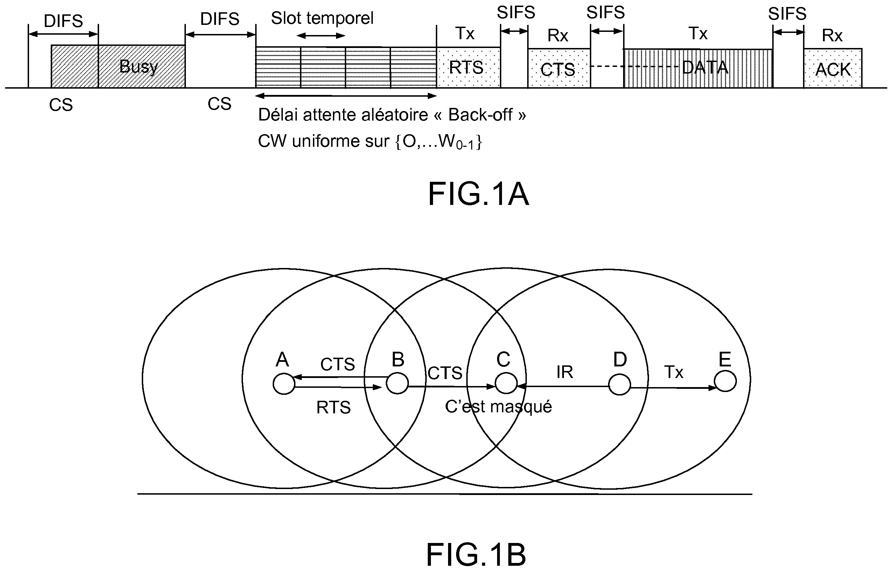

Historiquement, le protocole ALOHA est le premier protocole d'accès au canal distribué à accès aléatoire basé sur un réseau d'accès simple-bond utilisant la commutation par paquets sur canal radio. Le contrôle d'accès au canal est plus connu sous l'abréviation anglo-saxonne « MAC » ou Medium Access Control. Le protocole ALOHA permet à chaque utilisateur de transmettre des données lorsqu'il le désire. Si l'émetteur reçoit une confirmation par le destinataire de la bonne réception d'un paquet au cours d'un certain délai, alors il sait qu'aucun conflit ne s'est produit. Dans le cas contraire, à la fin de ce délai il suppose qu'une collision s'est produite et il doit retransmettre le paquet. Afin d'éviter la répétition continue des conflits d'accès, le délai de retransmission est aléatoire, évitant ainsi que les utilisateurs transmettent ou retransmettent aux mêmes instants. Une version synchrone d'ALOHA est obtenue en divisant le temps en intervalles de durées égales à la durée de transmission d'un paquet. Quand deux paquets sont en collision, alors ils se recouvrent complètement plutôt que partiellement, conduisant à une augmentation de l'utilisation du canal à 36% au lieu de 18% pour l'ALOHA asynchrone. L'amélioration principale dans la conception des protocoles MAC aléatoires a été l'introduction de la technique d'accès multiple avec écoute de canal CSMA (Carrier Sense Multiple Access). Le protocole CSMA réduit le niveau d'interférences provoquées par les collisions de paquets en permettant à chaque terminal d'écouter au préalable un canal et de détecter d'éventuelles transmissions en cours. Le protocole MAC du standard populaire IEEE802.11 est largement répandu pour les réseaux locaux sans fil, figure 1A. Il emploie un schéma d'accès multiple basé sur l'écoute du canal et un mécanisme de retransmission à fenêtres exponentielles binaires. Dans les réseaux simple-bond où tous les noeuds se voient mutuellement, les protocoles basés sur le protocole CSMA atteignent une très bonne utilisation du canal de transmission ou de communication de l'ordre de 80% [1][2].

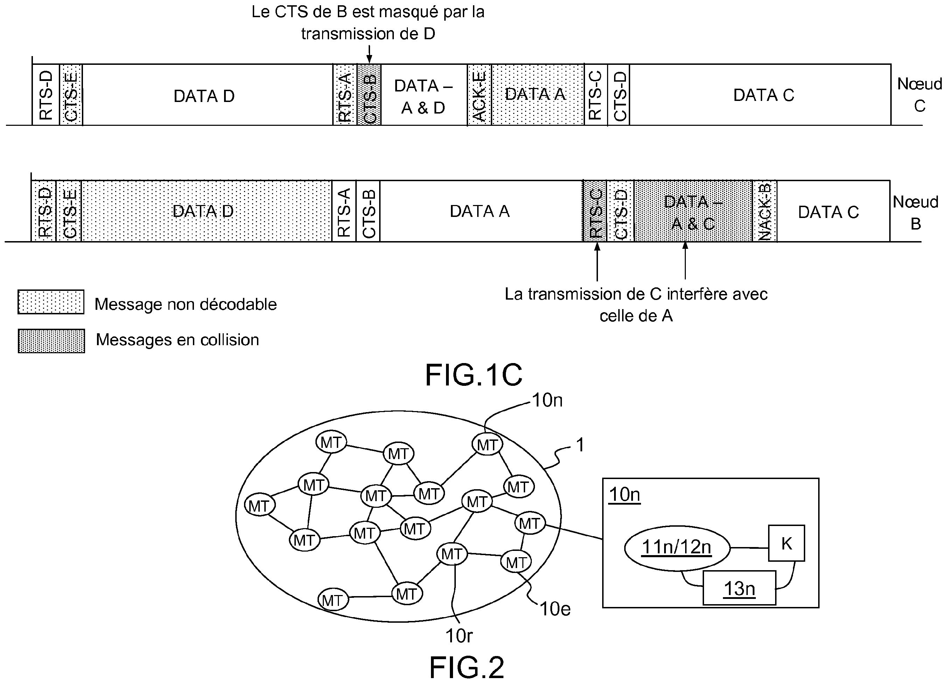

L'absence de visibilité directe entre tous les noeuds du réseau a un impact négatif sur les protocoles d'accès basés sur l'écoute du canal à cause du problème du terminal caché illustré à la figure 1B où un utilisateur A peut communiquer avec un utilisateur B en portée radio ou visibilité mais ne peut communiquer avec un utilisateur C. Afin de résoudre ce problème du terminal caché, le protocole IEEE 802.11, figure 1C, a défini un second mécanisme d'accès qui effectue une réservation du canal dans les voisinages de l'émetteur et du récepteur. La réservation est obtenue par l'échange de deux messages de signalisation, un premier message de demande pour transmettre connu sous l'acronyme anglo-saxon RTS (Request To Send) et un deuxième message « prêt à émettre » connu sous l'acronyme anglo-saxon CTS (Clear To Send) qui bloquent l'accès au canal pour les terminaux qui les reçoivent. Le mécanisme RTS/CTS vise à atteindre une réutilisation du canal à deux bonds radio. Cependant, le mécanisme n'arrive pas à résoudre correctement le problème du terminal caché car son fonctionnement correct nécessite que les noeuds du réseau aient accès à tous les messages de réservation de leurs voisinages. Cette contrainte est impossible à respecter dans les réseaux multi-bonds à cause du problème du terminal masqué. Le problème du terminal masqué dégrade donc fortement les performances du protocole dans les réseaux multi-bonds et ce problème s'accentue quand la taille du réseau augmente car le nombre de terminaux cachés/masqués augmente aussi. La figure 1C illustre le problème du terminal masqué, C.

L'enseignement technique du document US 2009/109938 concerne un procédé et un système de contrôle d'accès qui consiste, par exemple, à sélectionner une période de contrôle d'accès à un support de communication partagé, à diviser la période sélectionnée en plusieurs intervalles temporels dans lesquels, chaque slot a une durée qui est fonction de la durée de transmission d'une demande RTS, de la durée de transmission d'un message CTS, et d'un espace inter trames IFS. Dans ce document il y a transmission d'une trame RTS dans un slot sélectionné pour l'allocation d'une période de réservation pour accéder au média pour la transmission des données.

Le document de Shengming Jiang et al, intitulé «A simple distributed PRMA for MANETs», IEEE Transactions on Vehicular Technology, 1 mars 2002, décrit la division des mini-slots en deux champs de contrôle et l'utilisation de mini-slots « extra » pour la « contention ».

Le document de Fang J C et al, intitulé «A Synchronous Réservation Based Médium Access Control Protocol for Multihop Wireless Networks », IEEE Wireless Communications and networking conférence record, 16 mars 2003, indique l'utilisation d'un mini-slot additionnel qui précède chacun des slots de données. Une balise est transmise pendant ce mini-slot des récepteurs aux émetteurs correspondants afin d'éliminer tout problème de deadlock. Les mini-slots sont aussi utilisés pour confirmer les réservations.

A la connaissance du demandeur, aucun protocole dans la littérature ne définit un mécanisme pouvant supporter une réutilisation maximale du canal, permettant ainsi d'atteindre la capacité maximale de transmission du canal et d'atteindre la capacité maximale théorique d'un réseau ad-hoc dans le modèle du canal à collision. En effet, dans un mécanisme d'accès optimal, seuls les voisins des récepteurs ne peuvent accéder au canal.

L'invention concerne notamment un procédé de transmission de données, son protocole d'accès pour un réseau synchronisé utilisant un mode à accès multiple avec répartition dans le temps, connu sous l'acronyme anglo-saxon « TDMA » ou un mode d'accès similaire, dans lequel la trame est divisée en un ensemble de créneaux temporels ou « slots » pouvant contenir, soit la signalisation de réservation de type RTS/CTS, soit les données, soit encore une signalisation d'acquittement de bonne réception de données ou de fin de transmission.

Dans la suite de la description, on utilise les symboles suivants : DATA pour désigner des données, SIG pour la signalisation, RTS pour la demande à émettre ou Request To Send, CTS pour l'état prêt à émettre ou « Clear To Send », ACK pour l'accusé réception, P-ACK pour un accusé réception partielle, CAC pour désigner l'Accès au canal confirmé.

Dans le cas des variantes simples, on utilisera, par exemple, les lettres suivantes pour désigner les trames et slots intervenant : F pour une trame, S pour un slot, MS pour un mini-slot, MF pour une mini-trame, [F,SIG] pour une trame canal de signalisation, [F, DATA] une trame du canal de données, [S,SIG] un slot sur le canal de signalisation, [S,DATA] un slot du canal de données, [MS,SIG] un mini-slot de signalisation, [MS,DATA] un mini-slot du canal de données, GS pour les macro-blocs, GF pour les macro-trames, etc. Les indices ajoutés désigneront le rang d'un slot ou autre, par exemple MS1 est un premier mini-slot d'un slot.

On utilisera le mot noeud ou terminal pour désigner un même objet, une station radio mobile. Les références 10e désigne un noeud émetteur ou qui souhaite émettre, 10r un noeud destinataire ou récepteur.

L'invention concerne un procédé d'accès à un canal radio dans un système de communication comportant plusieurs terminaux communiquant entre eux par des liens radio, un terminal étant équipé de moyens d'émission et/ou de réception, d'un processeur adapté à exécuter les étapes du procédé, le procédé est caractérisé en ce qu'il utilise un protocole d'accès basé sur une trame de communication composée de plusieurs slots, les S premiers slots comprenant chacun deux mini-slots, le premier mini-slot comportant un message de signalisation de demande d'émission de données RTS ou des données, le deuxième mini-slot comprenant un message de signalisation de « prêt à recevoir », CTS, ou des données, l'avant dernier slot contenant un message de type RTS ou des données, le dernier slot contenant un message de type CTS et un message d'acquittement placé à la fin de la trame afin d'acquitter une ou plusieurs transmissions ayant lieu sur le canal radio.

Selon un mode de réalisation, une trame F est divisée en (M+1) mini-trames, chaque mini-trame présentant la structure précitée de la trame et pour les M premières mini-trames, le premier mini-slot du dernier slot contient un message CTS ou un message acquittement partiel P-ACK.

Le procédé est appliqué pour un système de communication comportant plusieurs terminaux communiquant entre eux par des liens radio, un terminal étant équipé de moyens d'émission et/ou de réception, d'un processeur adapté à exécuter les étapes du procédé selon l'invention, et il est caractérisé en ce qu'il met en oeuvre au moins un canal de signalisation SIG distinct d'un canal de données DATA, qu'il utilise un protocole d'accès basé sur une trame de communication (F) composée de plusieurs slots S(1), .., S(S+2). Le canal SIG reprend les mini-slots de signalisation RTS, [MS1, SIG] et CTS [MS2, SIG] organisés en S+1 slots, tandis que le canal DATA reprend les S+1 slots de données DATA, [S, DATA], et le slot ACK (dernier slot S+2 du canal DATA). Le dernier slot S+2 sur le canal SIG n'est pas utilisé. Les S+1 slots de signalisation du canal SIG correspondent aux S+1 slots de données du canal DATA. Le dernier slot non utilisé sur le canal de signalisation SIG correspond au slot ACK du canal DATA.

Le procédé utilise, par exemple, au moins un canal de signalisation distinct d'un canal de données, une trame est divisée en (M+1) mini-trames MF, la dernière mini-trame MF(M+1) présente la structure de la trame précédente, pour le canal SIG, on utilise M premières mini-trames composées chacune de S+2 slots, les S+1 slots étant composés chacun d'un mini-slot pour les messages RTS et d'un mini-slot pour les messages CTS, le dernier slot contient un mini-slot pour les messages d'acquittement partiel P-ACK et un mini-slot neutralisé, sur le canal DATA, on utilise M premières mini-trames composées chacune de S+2 slots, les S+1 premiers slots sont pour des messages de données, le dernier slot S+2 est composé d'un mini-slot neutralisé et d'un mini-slot pour les messages d'acquittement ACK.

La trame F sur le canal de signalisation SIG est composée, par exemple, au niveau des « S+1 » premiers slots, de trois mini-slots distribués de la manière suivante, un premier mini-slot pour l'envoi des messages RTS, un deuxième mini-slot pour l'envoi des messages de type CTS, un troisième mini-slot pour l'envoi des messages de type CAC.

Le procédé peut utiliser une trame composée au niveau des « S+1 » premiers slots de chaque mini-trame sur le canal de signalisation de trois mini-slots distribués de la manière suivante, un premier mini-slot pour l'envoi des messages RTS, un deuxième mini-slot pour l'envoi des messages de type CTS, un troisième mini-slot pour l'envoi des messages de type CAC, le dernier slot des M premières mini-trames sur le canal de signalisation SIG est modifié pour contenir trois mini-slots : le premier pour l'envoi des messages de type P-CAC, le deuxième pour l'envoi des messages de type P-ACK, et un troisième mini-slot non-utilisé, le dernier slot des M premières mini-trames sur le canal de données DATA est modifié pour contenir trois mini-slots : les deux premiers mini-slots ne sont pas utilisés et le troisième mini-slot est réservé à l'envoi des messages ACK.

Selon une variante de réalisation, la trame F est supportée par «Ns+Nd» canaux radio distincts (fréquence, code, etc...): «Ns» canaux SIG et «Nd» canaux DATA où «Nd» est multiple de «Ns» : «Nd=P*Ns», sur les canaux SIG, la trame contient «S+1» macro-slots de signalisation RTS/CTS et un dernier slot non-utilisé, chacun des macro-slots de signalisation est composé de «P» slots, et chaque slot est lui-même composé de deux mini-slots ; Le premier mini-slot transporte des messages de type RTS et le deuxième mini-slot transporte des messages de type CTS ; Le «i» ème slot de chaque macro-slot sur le «n»ème canal de signalisation est utilisé pour l'échange de signalisation de réservation RTS/CTS pour accéder au «d» ème canal de data tel que «d= (n-1)*P+i» ; Sur les canaux de DATA, la trame contient «S+1» macro-slots de DATA et un dernier slot d'acquittement ACK, chacun des macro-slots de DATA est lui-même composé de «P» slots de DATA.

On peut utiliser une trame supportée par «Ns+Nd» canaux radio distincts (fréquence, code, etc...): «Ns» canaux SIG (signalisation) et «Nd» canaux DATA(données), où «Nd» est multiple de «Ns» : «Nd=P*Ns» ; sur les canaux de SIG, la trame est divisée en « M+1 » (M >= 0) mini-trames, la dernière mini-trame reprend exactement la forme de la trame SIG ci-dessus décrite, sur les canaux de SIG, chacune des «M» premières mini-trames est composée de «S+2» macro-slots: «S+1» macro-slots de signalisation RTS/CTS et un dernier macro-slot de signalisation P-ACK, chacun des «S+1» macro-slots de signalisation RTS/CTS est composé de «P» slots, et chacun des «P» slots est lui-même composé de deux mini-slots ; Le premier mini-slot transporte des messages de type RTS et le deuxième mini-slot transporte des messages de type CTS, le macro-slot de signalisation P-ACK est composé de «P» slots qui transportent des messages de type P-ACK et un dernier slot non utilisé ; Le «i» ème slot de chaque macro-slot de chaque mini-trame sur le «n»ème canal SIG est utilisé pour l'échange de signalisation de réservation RTS/CTS pour accéder au «d» ème canal DATA tel que «d= (n-1)*P+i» ; Le «i» ème slot du dernier macro-slot P-ACK de chaque mini-trame sur le «n» ème canal SIG est utilisé pour l'envoi de message P-ACK correspondant au canal DATA «d» tel que «d= (n-1)*P+i»; Sur les canaux DATA, la trame contient aussi «M+1 » (M >= 0) mini-trames ; la dernière mini-trame reprend la forme de la trame DATA décrite ci-avant ; Sur les canaux DATA, chacune des «M» premières mini-trames est composée de «S+2» macro-slots: «S+1» macro-slots de DATA et un dernier macro-slot de signalisation ACK ; chacun des «S+1» macro-slots de DATA est composé de P slots de DATA, le macro-slot de signalisation ACK est composé de «P» slots non-utilisés et un dernier slot ACK pour transporter des messages de type ACK, la dernière mini-trame reprend la forme de la trame DATA décrite ci-avant.

Il est possible de modifier la trame sur les canaux de SIG de telle façon que chaque slot des macro-slots est composé de trois mini-slots: un premier mini-slot pour l'envoi des messages RTS, un deuxième mini-slot pour l'envoi des messages CTS, et un troisième mini-slot pour l'envoi d'un message de type CAC.

Selon une variante de réalisation, on modifie la trame sur les canaux de signalisation de façon telle que chaque slot des «S+1» premiers macro-slot de chaque mini-trame sur les canaux de signalisation est maintenant composé de trois mini-slots: un premier mini-slot pour l'envoi des messages RTS, un deuxième mini-slot pour l'envoi des messages CTS, et un troisième mini-slot pour l'envoi d'un message de type CAC, le dernier macro-slot des M premières mini-trames sur les canaux SIG est composé maintenant de 2P+1 slots : P slots P-CAC, P slots P-ACK, et un dernier slot non-utilisé, le dernier macro-slot des M premières mini-trames sur les canaux de DATA est modifié pour contenir 2P+1 slots : 2P slots non utilisés et un dernier slot ACK.

L'invention concerne aussi une structure de trame pour une utilisation dans un réseau synchrone avec accès en TDMA, comportant un nombre « S+2 » de slots, caractérisée en ce que sa structure comporte au moins les éléments suivants :
- les «S» premiers slots contiennent chacun deux mini-slots, le premier mini-slot contient un message de signalisation de type RTS ou données, le deuxième mini-slot contient un message de signalisation CTS ou des données,
- le premier mini-slot de l'avant dernier slot «S+1» contient un message RTS ou des données,
- le deuxième mini-slot de l'avant dernier slot «S+1» contient des données,
- le premier mini-slot du dernier slot contient un message de type CTS,
- le deuxième mini-slot du dernier slot contient un message de signalisation d'acquittement de type ACK.

D'autres caractéristiques et avantages de l'invention apparaitront mieux à la lecture de la description qui suit d'exemples de réalisation donnés à titre illustratif et nullement limitatif annexés des figures qui représentent :
- Les figures 1A, 1B et 1C, différents protocoles de l'art antérieur et une illustration de la problématique du terminal caché et du terminal masqué,
- La figure 2, une schématisation d'un réseau de communication dans lequel l'invention peut être mise en oeuvre,
- La figure 3A, un premier exemple de protocole, et la figure 3B, une variante du protocole de la figure 3A en version multi-trames,
- La figure 4A, une variante de réalisation de la figure 3A avec un canal de signalisation et un canal de données séparés, et la figure 4B, une variante avec multi-trames,
- La figure 5A, une variante de protocole avec un canal de signalisation et un canal de données séparés et validation du RTS, et la figure 5B, une variante multi-trames,
- La figure 6A, une variante du protocole multicanaux et la figure 6B, multi-trames, multicanaux,
- La figure 7A, une variante de la figure 6A avec validation du RTS, et la figure 7B, une variante de 6B avec validation du RTS.

L'exemple qui suit est donné à titre illustratif et nullement limitatif dans le cas d'un réseau ad hoc comprenant plusieurs terminaux 10n communiquant ensemble par des liens radios. Un terminal 10n comporte des moyens d'émission/réception, 11n, 12n, un processeur 13n adapté à exécuter les étapes des différentes variantes de mise en oeuvre du procédé, un compteur K.

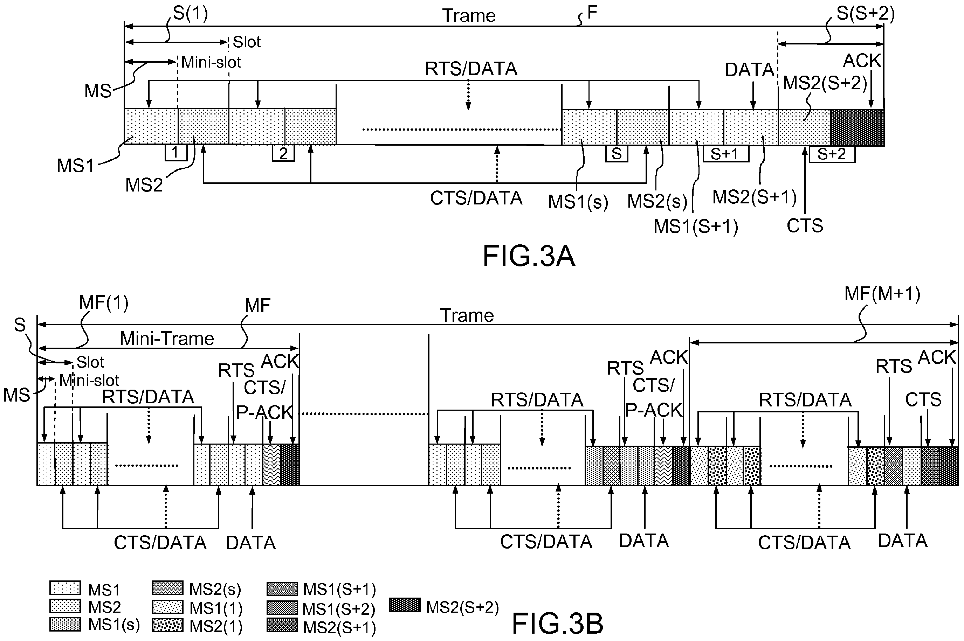

La figure 3A représente un premier exemple de protocole selon l'invention. On considère un réseau synchrone avec accès en TDMA. Chaque trame F est composée de «S+2» slots S(1),.., S(S+2). Les «S» premiers slots contiennent chacun 2 mini-slots MS1(s), MS2(s). Le premier mini-slot MS1(s) de chaque slot peut contenir soit le message de signalisation de type RTS soit des messages de données de type DATA. Le deuxième mini-slot MS2(s) de chaque slot S peut contenir soit le message de signalisation de type CTS soit des messages de données de type DATA. Le premier mini-slot MS1(S+1) du slot « S+1» peut contenir le message de type RTS ou des données. Le deuxième mini-slot MS2(S+1) ne peut contenir que des données. Le premier mini-slot MS1 (S+2) du slot « S+2» ne peut contenir que le message de type CTS. Le deuxième mini-slot MS2(S+2) ne peut contenir que le message de signalisation d'acquittement de type ACK. Une transmission de données peut prendre place à n'importe quel slot de la trame mais doit obligatoirement prendre fin à la fin de la trame où la transmission des données a commencé avant le dernier slot.

La mise en oeuvre du procédé de transmission avec ce type de trame comporte les étapes décrites ci-après.

### Phase A

Un noeud qui n'émet pas, écoute le canal. S'il détecte une émission sur le deuxième mini-slot MS2 (s) d'un des « S » premiers slots, il s'interdit alors tout accès au canal jusqu'à la fin de la trame courante Fc, trame utilisée pour la communication. Il devient ainsi un noeud bloqué sur la trame courante. S'il détecte une émission sur le premier mini-slot MS1 (S+2) du slot «S+2» de la trame courante Fc, il s'interdit alors tout accès au canal jusqu'à la fin de la trame suivante Fs. Il devient ainsi un noeud bloqué sur la trame suivante.

### Phase B

Un noeud 10n qui désire émettre des données, tire un nombre aléatoire (mécanisme connu sous le nom de Back-Off aléatoire) et initie un compte à rebours K avec la valeur du nombre tiré :
B.1 Sur les «S» premiers slots de la trame:
   B.1.a. Le compteur K est décrémenté à chaque slot s de la trame courante Fc si le noeud ne détecte pas d'émission sur tout le slot,
   B.1.b. Le compteur K est bloqué à chaque slot s si le noeud détecte une émission sur le premier mini-slot (RTS ou données), MS1(s),
   B.1.c. Le compteur K est bloqué jusqu'à la fin de la trame courante Fc si le noeud décode correctement un message RTS qui lui est destiné,
   B.1.d. Le compteur est bloqué jusqu'à la fin de la trame Fc si le noeud détecte une émission sur le deuxième mini-slot (CTS ou données), MS2(s),
B.2. Sur le «S+1»ème slot et le «S+2»ème slot de la trame Fc:
   B.2.a. Le compteur K est décrémenté une fois si le noeud ne détecte pas d'émission sur le premier mini-slot MS1(S+1) du slot S+1 et le premier mini-slot MS1(S+2) du slot S+2,
   B.2.b. Le compteur K est bloqué jusqu'à la fin de la trame suivante si le noeud décode correctement un message RTS qui lui est destiné,
   B.2.c. Le compteur K est bloqué jusqu'à la fin de la trame suivante si le noeud détecte une émission sur le premier mini-slot (CTS), MS1(S+2).

### Phase C

A l'expiration du compteur K, lorsque la valeur du compteur K atteint 0, le noeud émet un message de type RTS pour notifier son souhait d'émettre à un noeud destinataire. Cette émission a lieu:
C.1. Sur le premier mini-slot MS1 du slot suivant l'expiration du compteur K si le compteur K expire dans les « S » premiers slots de la trame Fc,
C.2. Sur le premier mini-slot MS1 de la trame suivante de la trame courante Fc si le compteur K expire aux slots «S+1» et «S+2» de la trame courante Fc.

### Phase D

Si le terminal destinataire 10r reçoit correctement le message de demande à émettre RTS et s'il n'est pas bloqué, alors il répond par l'envoi d'un message du type CTS pour indiquer au noeud émetteur 10e qu'il est disponible pour la réception. Si l'émission du message RTS a lieu dans un des «S» premiers slots alors le message CTS est envoyé sur le deuxième mini-slot (slot CTS) MS2(s) de ce slot s. Si l'émission du message RTS a lieu au slot «S+1» alors le message CTS est envoyé sur le premier mini-slot (slot CTS) du dernier slot «S+2», MS1(S+2).

### Phase E

E.1. Si le terminal émetteur 10e du RTS reçoit correctement le message CTS, alors la transmission des données commence au slot suivant de la trame courante Fc si l'échange réussi RTS/CTS a eu lieu dans un des « S » premiers slots de la trame, ou au premier slot de la trame suivante Fs si l'échange RTS/CTS a eu lieu aux derniers slots « S+1 » et « S+2 » de la trame courante Fc. Ainsi, la communication peut commencer à n'importe quel slot de la trame à l'expiration du compteur K et après un échange RTS/CTS réussi, mais elle se termine obligatoirement à la fin de la trame Fc ou de la trame Fs où la transmission de données a commencé juste avant le dernier slot,
E.2. Si le terminal émetteur 10e du RTS ne reçoit pas correctement le message CTS, alors il pourra soit abandonner la transmission courante des données, soit essayer à nouveau d'accéder au canal en suivant à nouveau les étapes de B à E jusqu'à recevoir correctement le message CTS. Si le noeud émetteur échoue à recevoir le message CTS après un nombre prédéfini de tentatives alors il abandonne la transmission courante des données.

### Phase F

Un noeud destinataire 10r ou récepteur transmet sur le dernier mini-slot MS2(S+2) de la trame un message du type accusé réception ACK, pour informer le noeud émetteur 10e de l'état de réception des données.

Une première variante de réalisation multi-trames est schématisée à la figure 3B. On considère un réseau synchrone avec un accès en TDMA. La trame est divisée en « M+1 » (M >= 0) mini-trames MF(f). Les « M» premières mini-trames sont optionnelles, la dernière mini-trame MF(F+1) est obligatoire et reprend exactement la forme de la trame basique décrite à la figure 3A. Chaque mini-trame est composée de «S+2» slots.

Les «S» premiers slots de chaque mini-trame MF contiennent chacun deux mini-slots MS1, MS2. Le premier mini-slot MS1(s) de chaque slot s peut contenir soit le message de signalisation de type RTS, soit des messages de données type DATA. Le deuxième mini-slot MS2(s) de chaque slot s peut contenir, soit le message de signalisation de type CTS, soit des messages de données type DATA.

Le premier mini-slot du slot « S+1» de chaque mini-trame [MS1(S+1), MF] peut contenir le message de type RTS ou des données. Le deuxième mini-slot [MS2(S+1), MF] ne peut contenir que des données.

Le dernier slot «S+2» d'une mini-trame MF est défini comme suit:
- Dans les « M» premières mini-trames: le premier mini-slot du slot « S+2», MS1(S+2) de chaque mini-trame MF peut contenir des messages de signalisation de type CTS ou P-ACK (Partial ACK). Le deuxième mini-slot « S+2», MS2(S+2), ne peut contenir que le message de signalisation d'acquittement de type ACK.
- Dans la dernière mini-trame MF(F+1): le premier mini-slot [MS1(S+2), MF(F+1)] du slot «S+2» ne peut contenir que le message de type CTS. Le deuxième mini-slot [MS2(S+2), MF(F+1)] ne peut contenir que le message de signalisation d'acquittement de type ACK.

Une transmission de données peut prendre place sur une ou plusieurs mini-trames mais doit obligatoirement prendre fin à la fin d'une des mini-trames de la trame où la transmission de données a commencé.

Les étapes associées au procédé de transmission mettant en oeuvre ce type de trame sont par exemple décrites ci-après.

### Phase A

Un noeud qui n'émet pas écoute le canal. S'il détecte une émission sur le deuxième mini-slot des « S » premiers slots de la mini-trame, [MS2(s), MFc], il s'interdit alors tout accès au canal jusqu'à la fin de la mini-trame courante, mini-trame utilisée pour la communication, il devient ainsi un noeud bloqué sur la mini-trame courante. S'il détecte une émission sur le premier mini-slot du slot «S+2» de la mini-trame courante MFc, [MS1(S+2), MFc] il s'interdit alors tout accès au canal jusqu'à la fin de la mini-trame suivante, il devient ainsi un noeud bloqué sur la mini-trame suivante.

### Phase B

Un noeud 10e qui désire émettre des données, tire un nombre aléatoire (mécanisme connu sous le nom de Back-Off aléatoire) et initie un compte à rebours K avec la valeur du nombre tiré :
B.1. Sur les «S » premiers slots de la mini-trame :
   B.1.a. Le compteur K est décrémenté à chaque slot de la trame courante Fc si le noeud 10e ne détecte pas d'émission sur tout le slot,
   B.1.b. Le compteur K est bloqué à chaque slot si le noeud 10e détecte une émission sur le premier mini-slot (RTS ou données), [MS1(s), Fc],
   B.1.c. Le compteur K est bloqué jusqu'à la fin de la réception si le noeud 10e décode correctement un message RTS qui lui est destiné, la fin de réception est indiquée dans le message RTS,
   B.1.d. Le compteur K est bloqué jusqu'à la fin de la mini-trame courante MFc si le noeud détecte une émission sur le deuxième mini-slot (CTS ou données), MS2(s),
B.2. Sur le «S+1»ème slot et le «S+2»ème de la mini-trame :
   B.2.a. Le compteur K est décrémenté si le noeud ne détecte pas d'émission sur le premier mini-slot MS1(S+1) du slot S+1 et sur le premier mini-slot MS1(S+2) du slot S+2,
   B.2.b. Le compteur K est bloqué jusqu'à la fin de la réception si le noeud décode correctement un message RTS qui lui est destiné, la fin de réception est indiquée dans le message RTS,
   B.2.c. Le compteur K est bloqué jusqu'à la fin de la mini-trame suivante si le noeud détecte une émission sur le premier mini-slot (CTS ou P-ACK), MS1(S+2).

### Phase C

A l'expiration du compteur K, lorsque la valeur du compteur K atteint 0, le noeud 10e émet un message du type RTS pour notifier son souhait d'émettre à un noeud destinataire. Cette émission a lieu:
C.1. Sur le premier mini-slot suivant l'expiration si le compteur K expire dans les « S » premiers slots de la mini-trame courante MFc,
C.2. Sur le premier mini-slot de la mini-trame suivante si le compteur K expire aux slots «S+1» et «S+2»de la mini-trame courante MFc.

### Phase D

Si le terminal destinataire 10r reçoit correctement le message de demande à émettre RTS et s'il n'est pas bloqué, alors le noeud destinataire 10r répond par l'envoi d'un message du type CTS pour indiquer au noeud émetteur qu'il est disponible pour la réception. Si l'émission du message RTS a lieu dans un des «S» premiers slots, alors le CTS est envoyé sur le deuxième mini-slot (slot CTS) de ce slot MS2(s). Si l'émission du message RTS a lieu au slot «S+1», alors le CTS est envoyé sur le premier mini-slot (slot CTS) du dernier slot «S+2», MS1(S+2).

### Phase E

E.1 Si le terminal émetteur 10e du RTS reçoit correctement le message CTS, alors la transmission des données commence au slot suivant si l'échange réussi RTS/CTS a eu lieu dans un des « S » premiers slots de la mini-trame courante, ou au premier slot de la mini-trame suivante si l'échange RTS/CTS a eu lieu aux derniers slots « S+1 » et « S+2 » de la mini-trame courante. Ainsi, la communication peut commencer à n'importe quel slot de la trame à l'expiration du compteur et après un échange RTS/CTS réussi, et peut s'étendre sur plusieurs mini-trames, mais se termine obligatoirement à la fin d'une des mini-trames de la trame où la transmission des données a commencé. Le noeud émetteur 10e indique la dernière mini-trame de la transmission des données dans son message RTS.
E.2. Si le terminal émetteur 10r ne reçoit pas correctement le message CTS, alors il pourra, soit abandonner la transmission courante des données, soit essayer à nouveau d'accéder au canal en suivant à nouveau les étapes de B à E jusqu'à recevoir correctement le message CTS. Si le noeud émetteur 10e échoue à recevoir le message CTS après un nombre prédéfini de tentatives alors il abandonne la transmission courante des données.

### Phase F

Un noeud destinataire 10r ou récepteur envoi un message ACK à la fin de la dernière mini-trame de transmission et un message P-ACK à la fin de chacune des autres mini-trames intermédiaires de la transmission.

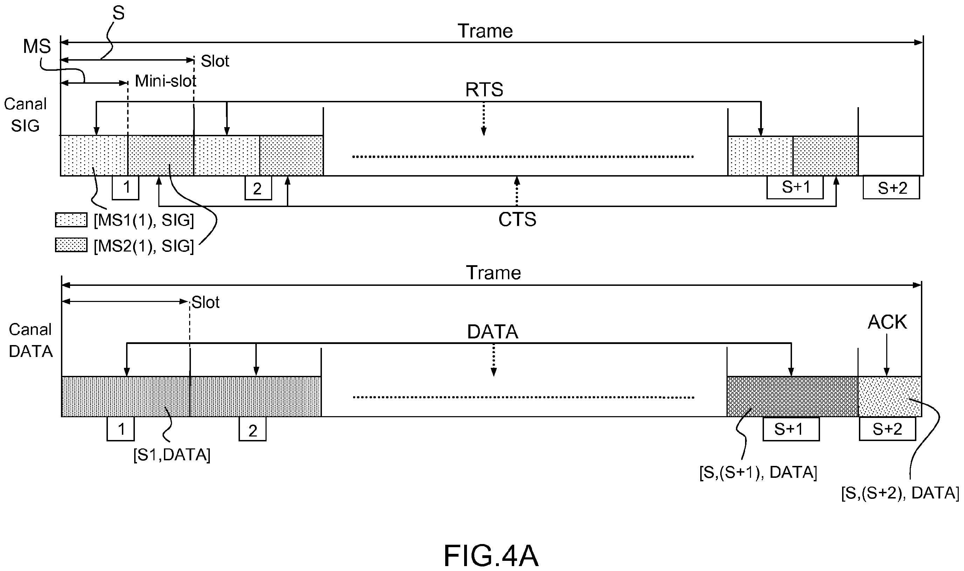

La figure 4A schématise un exemple de mise en oeuvre pour un réseau dans lequel le canal de signalisation et le canal de données sont séparés, canal SIG et canal DATA. On considère maintenant que la trame en TDMA de la version basique du protocole est supportée par deux canaux radio distincts (fréquence, code, etc....): un canal de signalisation, SIG et un canal de données, DATA. En se basant sur la figure 3A, le canal SIG reprend les mini-slots de signalisation RTS, [MS1, SIG] et CTS [MS2, SIG] organisés en S+1 slots, tandis que le canal DATA reprend les S+1 slots de données DATA, [S, DATA], et le slot ACK (dernier slot S+2 du canal DATA). Le dernier slot S+2 sur le canal SIG n'est pas utilisé. Les S+1 slots de signalisation du canal SIG correspondent aux S+1 slots de données du canal DATA. Le dernier slot non utilisé sur le canal de signalisation SIG correspond au slot ACK du canal DATA.

Les étapes du procédé utilisant cette variante de protocole d'accès au canal radio comporte les étapes décrites ci-après.

### Phase A

Un noeud qui n'est pas en émission ou en réception sur le canal de données DATA écoute le canal de signalisation SIG.
A.1 S'il détecte une émission sur un mini-slot CTS (deuxième mini-slot MS2(s) du slot s d'un des «S» premiers slots alors il s'interdit tout accès aux mini-slots RTS (premier mini-slot du slot MS1) du canal de signalisation SIG jusqu'à la fin de la trame courante Fc, il devient ainsi un noeud bloqué en émission sur la trame courante Fc,
A.2. S'il détecte une émission sur le mini-slot CTS du slot «S+1», MS2(S+1), alors il s'interdit tout accès aux mini-slots RTS du canal de signalisation SIG jusqu'à la fin de la trame suivante Fs, il devient ainsi un noeud bloqué en émission sur la trame suivante Fs,
A.3. S'il détecte une émission sur un mini-slot RTS (premier mini-slot du slot) d'un des «S» premiers slots, MS1(s), alors il s'interdit tout accès aux mini-slots CTS (deuxième mini-slot du slot) du canal de signalisation SIG jusqu'à la fin de la trame courante Fc, il devient ainsi un noeud bloqué en réception sur la trame courante Fc,
A.4. S'il détecte une émission sur le mini-slot RTS du slot «S+1», MS1(S+1), alors il s'interdit tout accès aux mini-slots CTS du canal de signalisation SIG jusqu'à la fin de la trame suivante Fs, il devient ainsi un noeud bloqué en réception sur la trame suivante Fs.

### Phase B

B.1. Un noeud 10e désirant émettre, tire un nombre aléatoire et initie un compte à rebours, K, avec la valeur du nombre tiré,
B.2. Le compteur K est décrémenté à chaque slot si le noeud 10e ne détecte pas d'émission sur le mini-slot CTS du slot [MS2(s), SIG],
B.3. Le compteur K est bloqué jusqu'à la fin de la trame courante Fc si le noeud 10e décode correctement un message RTS qui lui est destiné,
B.4. Sur les « S » premiers slots de la trame Fc, le compteur K est bloqué jusqu'à la fin de la trame courante Fc si le noeud 10e détecte une émission sur le mini-slot CTS du slot, [MS2(s), SIG].
B.5. Sur le slot « S+1 » de la trame Fc, le compteur K est bloqué jusqu'à la fin de la trame suivante Fs si le noeud 10e détecte une émission sur le mini-slot CTS du slot, [MS2(S+1), SIG],
B.6. Le compteur K est bloqué durant le slot « S+2 ».

### Phase C

A l'expiration du compteur K, le noeud 10e émet un message du type RTS pour notifier son souhait d'émettre au destinataire. Cette émission a lieu sur le canal de signalisation SIG,
C.1. Sur le premier mini-slot du slot suivant l'expiration du compteur K, MS1(s+1), si le compteur K expire dans les «S» premiers slots de la trame,
C.2. Sur le premier mini-slot du premier slot de la trame suivante Fs si le compteur expire au slot «S+1» de la trame courante Fc.

### Phase D

Si le terminal destinataire 10r reçoit correctement le message de demande à émettre RTS et s'il n'est pas bloqué en réception, alors le noeud destinataire 10r répond par l'envoi d'un message du type CTS pour indiquer au noeud émetteur 10e qu'il est disponible pour la réception. L'émission du message CTS a lieu sur le deuxième mini-slot (slot CTS) du slot où a eu lieu l'émission du message RTS, MS2(s, RTS).

### Phase E

E.1. Si le terminal émetteur 10e du RTS reçoit correctement le message CTS, alors la transmission des données commence, sur le canal DATA, au slot suivant (s+1) si l'échange réussi RTS/CTS a eu lieu dans un des « S » premiers slots de la trame, ou au premier slot S1(Fs=Fc+1) de la trame suivante Fs si l'échange RTS/CTS a eu lieu au slot « S+1 » de la trame courante Fc. Ainsi, la communication peut commencer à n'importe quel slot de la trame à l'expiration du compteur K et après un échange RTS/CTS réussi, mais elle se termine obligatoirement à la fin de la trame où la transmission de données a commencé juste avant le dernier slot,
E.2. Si le terminal émetteur 10e ne reçoit pas correctement le message CTS, alors il pourra soit abandonner la transmission courante des données, soit essayer à nouveau d'accéder au canal en suivant à nouveau les étapes des phases C à E jusqu'à recevoir correctement le message CTS. Si le noeud émetteur 10e échoue à recevoir le message CTS après un nombre prédéfini de tentatives alors il abandonne la transmission courante des données.

### Phase F

Un noeud récepteur 10r envoie sur le canal DATA, sur le dernier slot (S+2) de la trame courante Fc, un message du type ACK pour informer l'émetteur de l'état de réception des données.

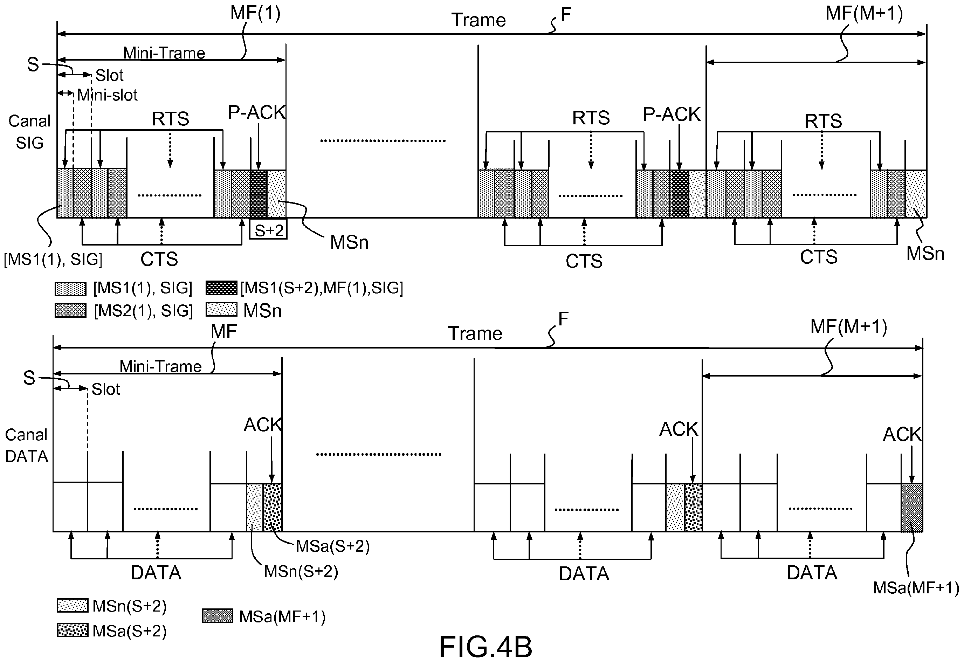

La figure 4B représente une variante dans le cas de multi-trames MF sur un canal de signalisation et un canal de données distincts. La trame F est divisée en « M+1 » (M >= 0) mini-trames MF(1),.., MF(M+1). Les « M» premières mini-trames sont optionnelles, la dernière mini-trame MF(M+1) est obligatoire et reprend exactement la forme de la trame de la variante décrite à la figure 4A. Le canal de signalisation SIG reprend les slots de signalisation RTS, CTS, et P-ACK tandis que le canal de données DATA reprend les slots de données et les slots ACK. Sur le canal de signalisation SIG, les «M» premières mini-trames MF sont composées chacune de «S+2» slots. Les «S+1» premiers slots sont composés chacun d'un mini-slot pour les messages RTS, [MS1, MF, SIG] et d'un mini-slot pour les messages CTS, [MS2, MF, SIG]. Le dernier slot (S+2) contient un premier mini-slot [MS1(S+2), MF, SIG] pour les messages d'acquittement partiel P-ACK et un deuxième mini-slot [MS2(S+2), SIG] neutralisé (non-utilisé) [MSn, MF(M+1)]. La dernière mini-trame MF+1 reprend exactement la forme de la trame du canal SIG (figure 4A) à l'exception du dernier slot qui ne contient qu'un mini-slot neutralisé. Sur le canal DATA, les «M» premières mini-trames sont composées chacune de « S+2» slots. Les «S+1» premiers slots sont pour les messages de données DATA tandis que le dernier slot d'une mini-trame est composé d'un mini-slot neutralisé MSn(S+2) et d'un mini-slot MSa(S+2) pour les messages ACK. La dernière mini-trame MF+1 reprend exactement la forme de la trame du canal DATA, figure 4A, à l'exception du dernier slot qui ne contient qu'un mini-slot pour les messages ACK, MSa (MF+1).
Une transmission de données peut maintenant prendre place sur une ou plusieurs mini-trames mais doit obligatoirement prendre fin à la fin d'une des mini-trames de la trame où la transmission de données a commencé.

Le procédé utilisant ce type de trames comprendra, par exemple, les étapes décrites ci-après.

### Phase A

Un noeud qui n'est pas en émission ou en réception sur le canal DATA écoute le canal de signalisation SIG en permanence (RTS, CTS, P-ACK)
A.1. S'il détecte une émission sur un mini-slot CTS (deuxième mini-slot du slot) d'un des «S» premiers slots, alors il s'interdit tout accès aux mini-slots RTS (premier mini-slot du slot) du canal SIG jusqu'à la fin de la mini-trame courante, il devient ainsi un noeud bloqué en émission sur la mini-trame courante MFc.
A.2. S'il détecte une émission sur le mini-slot CTS du slot «S+1», [MS2(S+1), MFc, SIG] alors il s'interdit tout accès aux mini-slots RTS du canal SIG jusqu'à la fin de la mini-trame suivante, il devient ainsi un noeud bloqué en émission sur la mini-trame suivante MFs,
A.3. S'il détecte une émission sur le mini-slot P-ACK du slot «S+2», [MS2(S+2), MFc, SIG] alors il s'interdit tout accès aux mini-slots RTS du canal SIG jusqu'à la fin de la mini-trame suivante, il devient ainsi un noeud bloqué en émission sur la mini-trame suivante MFs. Le mini-slot P-ACK n'est pas présent sur la dernière mini-trame M+1 de la trame.
A.4. S'il détecte une émission sur un mini-slot RTS (premier mini-slot du slot) d'un des «S» premiers slots, [MS1(s), MFc, SIG] alors il s'interdit tout accès aux mini-slots CTS (deuxième mini-slot du slot) du canal de signalisation SIG jusqu'à la fin de la mini-trame courante, il devient ainsi un noeud bloqué en réception sur la mini-trame courante MFc.
A.5. S'il détecte une émission sur le mini-slot RTS du slot «S+1», [MS1(S+1),MFc, SIG] alors il s'interdit tout accès aux mini-slots CTS du canal SIG jusqu'à la fin de la mini-trame suivante, il devient ainsi un noeud bloqué en réception sur la mini-trame suivante MFs.

### Phase B

Un noeud 10e désirant émettre tire un nombre aléatoire et initie un compte à rebours, K, avec la valeur du nombre tiré,
B.1. Le compteur K est décrémenté à chaque slot si le noeud ne détecte pas d'émission sur le mini-slot CTS du slot,
B.2. Le compteur K est bloqué jusqu'à la fin de la réception si le noeud 10e décode correctement un message RTS qui lui est destiné. La fin de la réception est indiquée dans le message RTS,
B.3. Sur les « S » premiers slots de la mini-trame, le compteur K est bloqué jusqu'à la fin de la mini-trame courante MFc si le noeud 10e détecte une émission sur le mini-slot CTS du slot,
B.4. Sur le slot « S+1 » de la mini-trame courante MFc, le compteur K est bloqué jusqu'à la fin de la mini-trame suivante MFs=MF(c+1) si le noeud détecte une émission sur le mini-slot CTS du slot, [MS2(S+1),MFc, SIG],
B.5. Sur le slot « S+2 » de la mini-trame courante MFc, le compteur K est bloqué jusqu'à la fin de la mini-trame suivante MFs=MF(c+1) si le noeud détecte une émission sur le mini-slot P-ACK du slot, [MS2(S+1),MFc, SIG]. Le mini-slot P-ACK n'est pas présent sur la dernière mini-trame M+1 de la trame.
B.6. Le compteur K est bloqué durant le slot « S+2 » de chaque mini-trame MF.

### Phase C

A l'expiration du compteur K le noeud 10e émet un message du type RTS pour notifier son souhait d'émettre au destinataire. Cette émission a lieu sur le canal SIG,
C.1. Sur le premier mini-slot du slot suivant l'expiration si le compteur K expire dans les «S» premiers slots de la mini-trame MFc,
C.2. Sur le premier mini-slot du premier slot de la mini-trame suivante MF(c+1) si le compteur K expire au slot «S+1» de la mini-trame courante MFc.

### Phase D

Si le terminal destinataire 10r reçoit correctement le message de demande à émettre RTS et s'il n'est pas bloqué en réception, alors le noeud destinataire 10r répond par l'envoi d'un message du type CTS pour indiquer au noeud émetteur qu'il est disponible pour la réception. L'émission du message CTS a lieu sur le deuxième mini-slot (slot CTS) du slot où a eu lieu l'émission du message RTS,

### Phase E

E.1. Si le terminal émetteur 10e du RTS reçoit correctement le message CTS, alors la transmission des données commence, sur le canal DATA, au slot suivant si l'échange réussi RTS/CTS a eu lieu dans un des « S » premiers slots de la mini-trame courante MFc, ou au premier slot de la mini-trame suivante MFs si l'échange RTS/CTS a eu lieu au slot « S+1 » de la mini-trame courante MFc. Ainsi, la communication peut commencer à n'importe quel slot de la trame Fc ou Fs à l'expiration du compteur K et après un échange RTS/CTS réussi, et peut s'étendre sur plusieurs mini-trames MF, mais se termine obligatoirement à la fin d'une des mini-trames de la trame Fc ou Fs où la transmission des données a commencé. Le noeud émetteur 10e indique la dernière mini-trame de la transmission des données dans son message RTS,
E.2. Si le terminal émetteur 10e ne reçoit pas correctement le message CTS, alors il pourra soit abandonner la transmission courante des données, soit essayer à nouveau d'accéder au canal en suivant à nouveau les étapes des phases C à E jusqu'à recevoir correctement le message CTS. Si le noeud émetteur échoue à recevoir le message CTS après un nombre prédéfini de tentatives, alors il abandonne la transmission courante des données.

### Phase F

Un noeud destinataire 10r ou récepteur envoie un message ACK sur le canal DATA à la fin de la dernière mini-trame de transmission et un message P-ACK sur le canal de signalisation à la fin de chacune des autres mini-trames intermédiaires de la transmission.

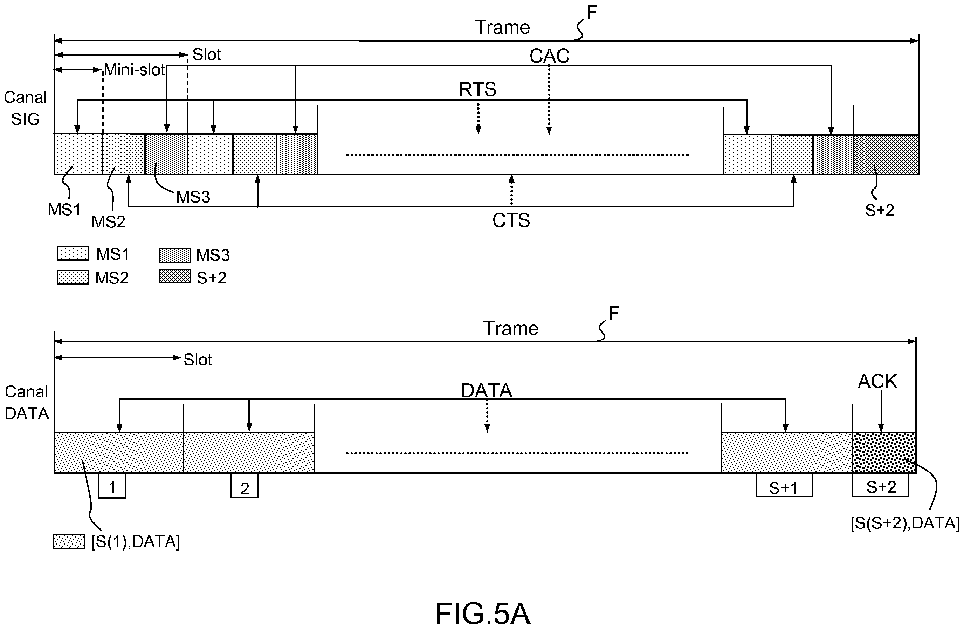

La figure 5A schématise une variante pour un canal de signalisation et un canal de données séparés avec une étape de validation du RTS. On reprend la trame en TDMA de la variante de la figure 4A du protocole et on modifie la trame sur le canal de signalisation de telle façon que chaque slot des «S+1» premiers slot est maintenant composé de trois mini-slots: un premier mini-slot MS1 pour l'envoi des messages RTS, un deuxième mini-slot MS2 pour l'envoi des messages CTS, et un troisième mini-slot MS3 pour l'envoi des messages de type confirmation de l'accès au canal ou CAC (Channel Access Confirmed). Un message de type CAC est envoyé par un noeud qui a réussi un échange RTS/CTS pour informer son voisinage qu'il a bien reçu une réponse positive à son message RTS et qu'il va donc accéder effectivement au canal DATA.

Les étapes du procédé mettant en oeuvre un tel type de trame seront alors les suivantes.

### Phase A

Un noeud qui n'est pas en émission ou en réception sur le canal DATA écoute le canal SIG,
A.1. S'il détecte une émission sur un mini-slot CTS (deuxième mini-slot du slot) d'un des «S» premiers slots, [MS2, SIG] alors il s'interdit tout accès aux mini-slots RTS (premier mini-slot du slot [MS1, SIG]) du canal SIG jusqu'à la fin de la trame courante, il devient ainsi un noeud bloqué en émission sur la trame courante Fc.
A.2. S'il détecte une émission sur le mini-slot CTS du slot «S+1», [MS2(S+1), SIG]) alors il s'interdit tout accès aux mini-slots RTS du canal de SIG jusqu'à la fin de la trame suivante, il devient ainsi un noeud bloqué en émission sur la trame suivante Fs,
A.3. S'il détecte une émission sur le mini-slot CAC (troisième mini-slot du slot) d'un des «S» premiers slots, [MS3, SIG]) alors il s'interdit tout accès aux mini-slots CTS du canal SIG jusqu'à la fin de la trame courante, il devient ainsi un noeud bloqué en réception sur la trame courante Fc,
A.4. S'il détecte une émission sur le mini-slot CAC (troisième mini-slot du slot) du slot «S+1», alors il s'interdit tout accès aux mini-slots CTS du canal SIG jusqu'à la fin de la trame suivante, il devient ainsi un noeud bloqué en réception sur la trame suivante Fs.

### Phase B

Un noeud 10e désirant émettre tire un nombre aléatoire et initie un compte à rebours K avec la valeur du nombre tiré,
B.1. Le compteur K est décrémenté à chaque slot si le noeud 10e ne détecte pas d'émission sur le mini-slot CTS du slot,
B.2. Le compteur K est bloqué jusqu'à la fin de la trame si le noeud décode correctement un message RTS qui lui est destiné,
B.3. Sur les « S » premiers slots de la trame, le compteur K est bloqué jusqu'à la fin de la trame courante Fc si le noeud 10e détecte une émission sur le mini-slot CTS du slot, MS2(s),
B.4. Sur le slot « S+1 » de la trame Fc, le compteur K est bloqué jusqu'à la fin de la trame suivante Fs, si le noeud 10e détecte une émission sur le mini-slot CTS du slot,
B.5. Le compteur K est bloqué durant le slot « S+2 »,

### Phase C

A l'expiration du compteur K le noeud 10e émet un message du type RTS pour notifier son souhait d'émettre au destinataire 10r. Cette émission a lieu sur le canal SIG,
C.1. Sur le premier mini-slot du slot suivant l'expiration si le compteur K expire dans les «S» premiers slots de la trame,
C.2. Sur le premier mini-slot du premier slot de la trame suivante Fs si le compteur K expire au slot «S+1» de la trame courante Fc.

### Phase D

Si le terminal destinataire 10r reçoit correctement le message de demande à émettre RTS et s'il n'est pas bloqué en réception, alors le noeud destinataire répond par l'envoi d'un message du type CTS pour indiquer au noeud émetteur qu'il est disponible pour la réception. L'émission du message CTS a lieu sur le mini-slot CTS du slot où a eu lieu l'émission du message RTS, MS2(s, RTS).

### Phase E

E.1. Si le terminal émetteur 10e du RTS reçoit correctement le message CTS alors il envoie un message de type CAC sur le canal SIG sur le troisième mini-slot du slot où a eu l'échange RTS/CTS, MS3(s, RTS/CTS). La transmission des données commence, sur le canal DATA, au slot suivant si l'échange réussi RTS/CTS a eu lieu dans un des « S » premiers slots de la trame, ou au premier slot de la trame suivante Fs si l'échange RTS/CTS a eu lieu au slot « S+1 » de la trame courante Fc. Ainsi, la communication peut commencer à n'importe quel slot de la trame à l'expiration du compteur et après un échange RTS/CTS réussi, mais elle se termine obligatoirement à la fin de la trame où la transmission de données a commencé juste avant le dernier slot,
E.2. Si le terminal émetteur 10e ne reçoit pas correctement le message CTS alors il pourra soit abandonner la transmission courante des données, soit essayer à nouveau d'accéder au canal en suivant à nouveau les étapes des phases C à E jusqu'à recevoir correctement le message CTS. Si le noeud émetteur 10e échoue à recevoir le message CTS après un nombre prédéfini de tentatives alors il abandonne la transmission courante des données.

### Phase F

Un noeud récepteur 10r envoie sur le canal DATA sur le dernier slot de la trame un message du type ACK pour informer l'émetteur de l'état de réception des DATA.

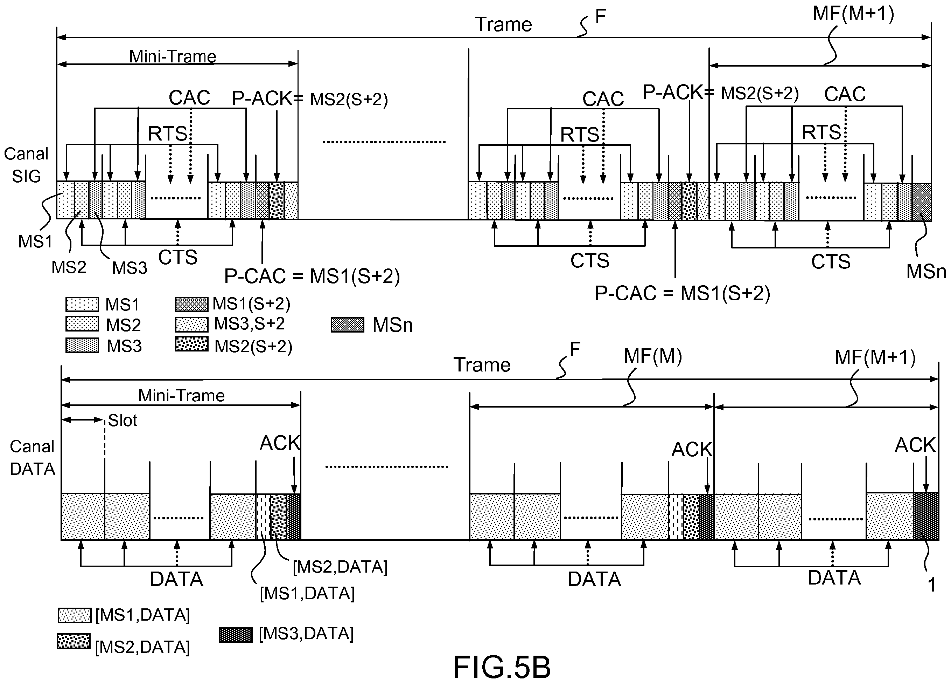

La figure 5B schématise une variante de la figure 5A dans le cas multi-trames avec M+1 (M>=0) mini-trames. On reprend la trame en TDMA de la variante décrite à la figure 4B du protocole et on modifie la trame sur le canal de signalisation de telle façon que chaque slot des «S+1 » premiers slot de chaque mini-trame est maintenant composé de trois mini-slots: un premier mini-slot MS1 pour l'envoi des messages RTS, un deuxième mini-slot MS2 pour l'envoi des messages CTS, et un troisième mini-slot MS3 pour l'envoi d'un message de type CAC. Le dernier slot S+2 des M premières mini-trames sur le canal SIG est modifié pour contenir trois mini-slots : le premier MS1 (S+2) pour l'envoi des messages de type P-CAC (Persistent CAC), le deuxième MS2(S+2) pour l'envoi des messages de type P-ACK, et un troisième MS3(S+2) mini-slot non-utilisé. Le message P-CAC permet à un noeud émetteur qui a gagné l'accès au canal de donnés DATA sur plusieurs mini-trames d'informer son voisinage à la fin de chaque mini-trame qu'il continuerait sa transmission de données sur le canal de données DATA durant la mini-trame suivante. Ce message n'est donc pas envoyé à la fin de la dernière mini-trame de transmission de données.

Le dernier slot S+2 des M premières mini-trames sur le canal de données DATA est modifié pour contenir trois mini-slots : les deux premiers mini-slots [MS1, MS2, DATA] ne sont pas utilisés, et le troisième mini-slot [MS3,DATA] est réservé à l'envoi des messages ACK.

Le procédé utilisant ce type de trames comprendra par exemple les étapes décrites ci-après.

### Phase A

Un noeud qui n'est pas en émission ou en réception sur le canal DATA écoute le canal SIG,
A.1. S'il détecte une émission sur un mini-slot CTS (deuxième mini-slot du slot) d'un des «S» premiers slots, alors il s'interdit tout accès aux mini-slots RTS (premier mini-slot du slot) du canal de signalisation SIG jusqu'à la fin de la mini-trame courante, il devient ainsi un noeud bloqué en émission sur la mini-trame courante,
A.2. S'il détecte une émission sur le mini-slot CTS du slot «S+1», alors il s'interdit tout accès aux mini-slots RTS du canal de signalisation SIG jusqu'à la fin de la mini-trame suivante, il devient ainsi un noeud bloqué en émission sur la mini-trame suivante,
A.3. S'il détecte une émission sur le mini-slot P-ACK du slot «S+2», alors il s'interdit tout accès aux mini-slots RTS du canal de signalisation SIG jusqu'à la fin de la mini-trame suivante, il devient ainsi un noeud bloqué en émission sur la mini-trame suivante,
A.4. S'il détecte une émission sur le mini-slot CAC (troisième mini-slot du slot) d'un des «S» premiers slots, alors il s'interdit tout accès aux mini-slots CTS du canal SIG jusqu'à la fin de la mini-trame courante, il devient ainsi un noeud bloqué en réception sur la trame courante,
A.5. S'il détecte une émission sur le mini-slot CAC (troisième mini-slot du slot) du slot «S+1», alors il s'interdit tout accès aux mini-slots CTS du canal de signalisation jusqu'à la fin de la mini-trame suivante, il devient ainsi un noeud bloqué en réception sur la mini-trame suivante,
A.6. S'il détecte une émission sur le mini-slot P-CAC du slot «S+2», alors il s'interdit tout accès aux mini-slots CTS du canal de signalisation SIG jusqu'à la fin de la mini-trame suivante, il devient ainsi un noeud bloqué en réception sur la mini-trame suivante,

### Phase B

Un noeud 10e désirant émettre tire un nombre aléatoire et initie un compte à rebours K avec la valeur du nombre tiré,
B.1. Le compteur K est décrémenté à chaque slot si le noeud 10e ne détecte pas d'émission sur le mini-slot CTS du slot,
B.2. Le compteur K est bloqué jusqu'à la fin de la réception si le noeud 10e décode correctement un message RTS qui lui est destiné. La fin de la réception est indiquée dans le message RTS,
B.3. Sur les « S » premiers slots de la mini-trame, le compteur K est bloqué jusqu'à la fin de la mini-trame courante MFc si le noeud 10e détecte une émission sur le mini-slot CTS du slot,
B.4. Sur le slot « S+1 » de la mini-trame MFc, le compteur K est bloqué jusqu'à la fin de la mini-trame suivante MFs si le noeud détecte une émission sur le mini-slot CTS du slot,
B.5. Sur le slot « S+2 » de la mini-trame MFc, le compteur K est bloqué jusqu'à la fin de la mini-trame suivante MFs si le noeud détecte une émission sur le mini-slot P-ACK du slot,
B.6. Le compteur K est bloqué durant le slot « S+2 » de chaque mini-trame MF de la trame,

### Phase C

A l'expiration du compteur K le noeud 10e émet un message du type RTS pour notifier son souhait d'émettre au destinataire. Cette émission a lieu sur le canal SIG,
C.1. Sur le premier mini-slot du slot suivant l'expiration si le compteur K expire dans les «S» premiers slots de la mini-trame,
C.2. Sur le premier mini-slot du premier slot de la mini-trame suivante si le compteur expire au slot «S+1» de la mini-trame courante,

### Phase D

Si le terminal destinataire reçoit correctement le message de demande à émettre RTS et s'il n'est pas bloqué en réception, alors le noeud destinataire répond par l'envoi d'un message du type CTS pour indiquer au noeud émetteur qu'il est disponible pour la réception. L'émission du message CTS à lieu sur le deuxième mini-slot (slot CTS) du slot où a eu lieu l'émission du message RTS,

### Phase E

E.1. Si le terminal émetteur 10e du RTS reçoit correctement le message CTS, alors il envoie un message de type CAC sur le canal de signalisation SIG sur le troisième mini-slot du slot où a eu l'échange RTS/CTS. La transmission des données commence, sur le canal DATA, au slot suivant si l'échange réussi RTS/CTS a eu lieu dans un des « S » premiers slots de la mini-trame, ou au premier slot de la mini-trame suivante si l'échange RTS/CTS a eu lieu au slot « S+1 » de la mini-trame courante. Ainsi, la communication peut commencer à n'importe quel slot de la trame à l'expiration du compteur et après un échange RTS/CTS réussi, et peut s'étendre sur plusieurs mini-trames, mais se termine obligatoirement à la fin d'une des mini-trames de la trame où la transmission des données a commencé. Le noeud émetteur indique la dernière mini-trame de la transmission des données dans son message RTS.
E.2. Si le terminal émetteur ne reçoit pas correctement le message CTS alors il pourra soit abandonner la transmission courante des données soit essayer à nouveau d'accéder au canal en suivant à nouveau les étapes des phases C à E jusqu'à recevoir correctement le message CTS. Si le noeud émetteur échoue à recevoir le message CTS après un nombre prédéfini de tentatives alors il abandonne la transmission courante des données.

### Phase F

Le noeud émetteur envoie un message P-CAC sur le canal SIG sur le premier mini-slot du dernier slot S+2 de chacune des mini-trames de transmission de données à l'exception de la dernière mini-trame de transmission de données.

### Phase G

Le noeud destinataire ou récepteur envoie un message ACK sur le canal DATA à la fin de la dernière mini-trame de transmission des données et un message P-ACK sur le canal de signalisation sur le deuxième mini-slot du dernier slot S+2 de chacune des autres mini-trames intermédiaires de la transmission des données.

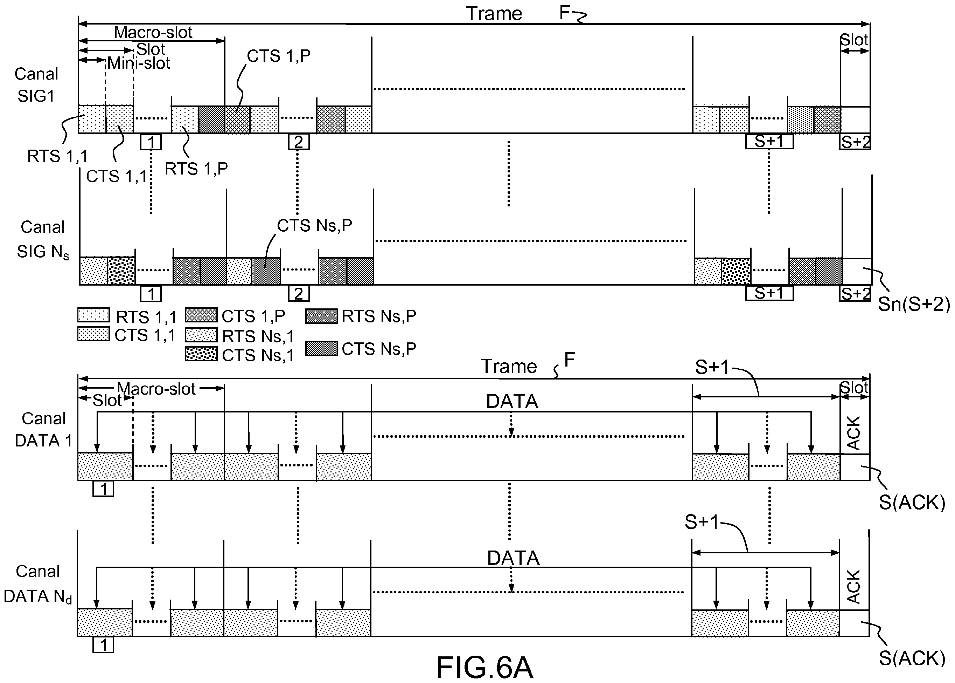

La figure 6A schématise la structure d'une trame dans le cas d'une transmission sur Ns canaux de signalisation et sur Nd canaux de données. On considère maintenant que la trame en TDMA de la version du protocole décrite dans la figure 4A est supportée par «Ns+Nd» canaux radio distincts (fréquence, code, etc....): «Ns» canaux SIG et «Nd» canaux DATA où «Nd» est multiple de «Ns» : «Nd=P*Ns». On suppose que les noeuds 10n sont capables de recevoir simultanément sur les «Ns» canaux SIG. Sur les canaux de SIG, la trame contient «S+1» macro-slots de signalisation RTS/CTS, [GS, SIG] et un dernier slot non-utilisé Sn(S+2). Chacun des macro-slots de signalisation [GS, SIG] est composé de «P» slots, et chaque slot est lui-même composé de deux mini-slots RTS_{n,i}, CTS_{n,i} avec n le numéro de canal et i le numéro de slot dans un macro-slot GS. Le premier mini-slot RTS_{n i} transporte des messages de type RTS et le deuxième mini-slot CTS_{n, i} transporte des messages de type CTS. Le «i»ème slot de chaque macro-slot GS sur le «n» ème canal de signalisation SIG est utilisé pour l'échange de signalisation de réservation RTS/CTS pour accéder au «d»ème canal de données tel que «d= (n-1)*P+i». Sur les canaux de données DATA, la trame contient «S+1» macro-slots de données et un dernier slot d'acquittement ACK S(ACK). Chacun des macro-slots de données ou DATA est lui-même composé de «P» slots de données DATA.

En utilisant cette structure de trame, le procédé comporte les étapes décrites ci-après.

### Phase A

Un noeud qui n'est pas en émission ou en réception sur un canal DATA écoute les canaux SIG,
A.1. S'il détecte une émission sur le canal SIG « n » sur le mini-slot CTS du «i»ème slot CTS_{n,i} d'un des « S» premiers macro-slots de la trame Fc alors il s'interdit tout accès aux mini-slots RTS du «i»ème slot des macro-slots sur ce canal de signalisation « n » jusqu'à la fin de la trame courante, il devient ainsi un noeud bloqué en émission au canal DATA «d=(n-1)P+i» correspondant à ce canal de signalisation « n » et à ce slot « i » jusqu'à la fin de la trame courante,
A.2. S'il détecte une émission sur le canal SIG « n » sur le mini-slot CTS du «i»ème slot du macro-slot « S+1» [CTS_{n,i}, GS(S+1)] de la trame Fc, alors il s'interdit tout accès aux mini-slots RTS du «i»ème slot des macro-slots [RTS_{n,i}, GS(s)] sur ce canal de signalisation « n » jusqu'à la fin de la trame suivante Fs, il devient ainsi un noeud bloqué en émission sur le canal DATA «d=(n-1)P+i » correspondant à ce canal de signalisation « n » et à ce slot « i » jusqu'à la fin de la trame suivante.
A.3. S'il détecte une émission sur le canal SIG « n » sur le mini-slot RTS [RTS_{n,i}, GS(s)] du «i»ème slot d'un des «S» premiers macro-slots de la trame alors il s'interdit tout accès aux mini-slots CTS du «i»ème slot des macro-slots [CTS_{n,i}, GS(s)] sur ce canal de signalisation « n » jusqu'à la fin de la trame courante, il devient ainsi un noeud bloqué en réception sur le canal DATA «d=(n-1)P+i»correspondant à ce canal de signalisation « n » et à ce slot « i » jusqu'à la fin de la trame courante,
A.4. S'il détecte une émission sur le canal SIG « n » sur le mini-slot RTS du «i»ème slot du macro-slot «S+1» [RTS_{n,i}, GS(S+1)] de la trame Fc, alors il s'interdit tout accès aux mini-slots CTS du «i»ème slot des macro-slots [CTS_{n,i}, GS(s)] sur ce canal de signalisation «n» jusqu'à la fin de la trame suivante, il devient ainsi un noeud bloqué en réception sur le canal DATA «d=(n-1)P+i» correspondant à ce canal de signalisation « n » et à ce slot « i » jusqu'à la fin de la trame suivante.

### Phase B

Un noeud 10e désirant émettre tire un nombre aléatoire et initie un compte à rebours K avec la valeur du nombre tiré. Le noeud 10e écoute en permanence simultanément tous les canaux de signalisation SIG. Sur chaque canal de signalisation « n »,
B.1. Le compteur K est décrémenté à chaque slot s des macro-slots GS(s) de signalisation SIG si le noeud ne détecte pas d'émission sur le mini-slot CTS du slot,
B.2. Sur les « S » premiers macro-slots de la trame, le compteur K est bloqué et le noeud 10e est bloqué en émission sur le canal de signalisation «n» et sur le slot «i» de chaque macro-slot jusqu'à la fin de la trame courante Fc si le noeud détecte une émission sur le mini-slot CTS du slot «i». Le noeud est bloqué en émission sur le canal DATA correspondant «d=(n-1)P+i» jusqu'à la fin de la trame courante,
B.3. Sur le macro-slot « S+1 », GS(S+1) le compteur K est bloqué et le noeud 10e est bloqué en émission sur le canal de signalisation « n » et sur le slot «i» de chaque macro-slot jusqu'à la fin de la trame suivante si le noeud 10e détecte une émission sur le mini-slot CTS du slot «i». Le noeud 10e est bloqué en émission sur le canal DATA correspondant «d=(n-1)P+i» jusqu'à la fin de la trame suivante,
B.4. Le compteur K est bloqué durant le dernier slot de la trame Fc.

### Phase C

A l'expiration du compteur K le noeud 10e émet un message du type RTS pour notifier son souhait d'émettre au destinataire 10r. Cette émission se produit sur le slot «i » et le canal de signalisation « n » correspondant au canal DATA «d=(n-1)P+i» choisi aléatoirement par le noeud émetteur 10e parmi les canaux DATA sur lesquels il n'est pas bloqué en émission. L'émission a lieu :
C.1. Sur le macro-slot suivant l'expiration si le compteur expire dans les «S» premiers macro-slots de la trame,
C.2. Sur le premier macro-slot de la trame suivante Fs si le compteur expire au macro-slot «S+1»de la trame courante Fc.

### Phase D

Si le destinataire 10r reçoit correctement le message RTS sur le slot RTS_{n,i} et s'il n'est pas bloqué en réception sur le canal DATA «d=(n-1)P+i» correspondant au slot «i» et au canal SIG « n » utilisé pour l'envoi du message RTS, alors il répond par l'envoi d'un message CTS sur le deuxième mini-slot CTS_{n,i} du slot « i » où a eu lieu l'émission du message RTS et sur le même canal SIG « n » où a eu lieu l'émission du RTS pour indiquer au noeud émetteur qu'il est disponible pour la réception.

### Phase E

E.1. Si le noeud émetteur 10e reçoit correctement le message CTS alors la transmission des données se produit sur le canal DATA «d=(n-1)P+i» correspondant au slot « i » et au canal de signalisation « n » utilisé pour l'échange des messages RTS/CTS. La transmission des données commence au slot suivant (s+1) si l'échange RTS/CTS a eu lieu dans un des «P-1» premiers slots s du macro-slot courant GS_{c}, ou au premier slot du macro-slot suivant GS_{c+1} si l'échange RTS/CTS a eu lieu au slot «P» du macro-slot courant GS_{c}. La communication peut commencer à n'importe quel slot s de la trame Fc ou Fs à l'expiration du compteur K et après un échange réussi RTS/CTS, mais se termine obligatoirement à la fin de la trame Fc ou Fs où la transmission de données a commencé juste avant le slot d'accusé réception, ACK, S(ACK).
E.2. Si le terminal émetteur 10e ne reçoit pas correctement le message CTS, alors il pourra soit abandonner la transmission courante des données, soit essayer à nouveau d'accéder au canal en suivant à nouveau les étapes des phases C à E jusqu'à recevoir correctement le message CTS. Si le noeud émetteur 10e échoue à recevoir le message CTS après un nombre prédéfini de tentatives alors il abandonne la transmission courante des données.

### Phase F

Un noeud récepteur 10r envoie sur le canal DATA où a eu lieu sa réception sur le dernier slot de la trame, un message du type ACK pour informer l'émetteur de l'état de réception des DATA

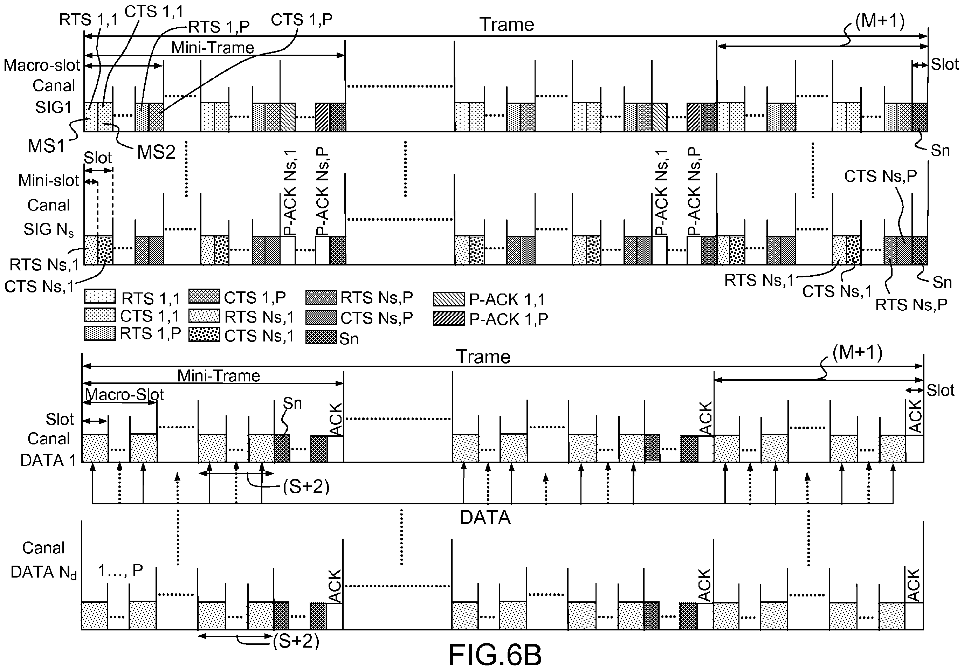

La figure 6B représente une variante de trame semblable à celle de la figure 6A dans le cas de multi-trames MF. On considère maintenant que la trame en TDMA de la version multi-trames MF du protocole est supportée par «Ns+Nd» canaux radio distincts (fréquence, code, etc...): «Ns» canaux SIG (signalisation) et «Nd» canaux DATA (données), où «Nd» est multiple de «Ns» : «Nd=P*Ns». On suppose que les noeuds 10n sont capables de recevoir simultanément sur les «Ns» canaux de SIG. Sur les canaux SIG, la trame est divisée en « M+1 » (M >= 0) mini-trames. Les « M» premières mini-trames MFi sont optionnelles, la dernière mini-trame MF (M+1) est obligatoire et reprend exactement la forme de la trame SIG de la Variante de la figure 6.A. Sur les canaux de SIG, chacune des «M» premières mini-trames MF est composée de «S+2» macro-slots GS: «S+1» macro-slots de signalisation RTS/CTS GS(RTS/CTS) et un dernier macro-slot de signalisation P-ACK, GS(P-ACK). Chacun des «S+1» macro-slots de signalisation RTS/CTS est composé de «P» slots, et chacun des «P» slots est lui-même composé de deux mini-slots, MS1=RTS_{n,i}, MS2=CTS_{n,i} avec n le numéro de canal de signalisation et i le numéro ou position du slot dans un macro-slot. Le premier mini-slot RTS_{n,i} transporte des messages de type RTS et le deuxième mini-slot CTS_{n,i} transporte des messages de type CTS. Le macro-slot de signalisation P-ACK GS(P-ACK_{n,i}) est composé de «P» slots qui transportent des messages de type P-ACK et un dernier slot non utilisé Sn. La dernière mini-trame MF(M+1) reprend la construction des «M» premières trames à l'exception du dernier macro-slot qui ne contient maintenant qu'un seul slot non utilisé [Sn, MF(M+1)]. Le «i»ème slot de chaque macro-slot GS de chaque mini-trame MF sur le «n»ème canal SIG est utilisé pour l'échange de signalisation de réservation RTS/CTS pour accéder au «d»ème canal DATA tel que «d= (n-1)*P+i». Le «i»ème slot du dernier macro-slot P-ACK, GS(P-ACK_{n,i}) de chaque mini-trame MF sur le «n»ème canal SIG est utilisé pour l'envoi de message P-ACK correspondant au canal DATA «d» tel que «d= (n-1)*P+i». Sur les canaux DATA, la trame contient aussi «M+1» (M >= 0) mini-trames MF. Les « M» premières mini-trames sont optionnelles, la dernière mini-trame est obligatoire et reprend exactement la forme de la trame DATA de la variante figure 6.A. Sur les canaux DATA, chacune des «M» premières mini-trames MF est composée de «S+2» macro-slots: «S+1» macro-slots de DATA et un dernier macro-slot de signalisation ACK. Chacun des «S+1» macro-slots de DATA est composé de P slots de données. Le macro-slot de signalisation ACK est composé de «P» slots non-utilisés Sn et un dernier slot ACK pour transporter des messages de type ACK. La dernière mini-trame MF(M+1) reprend la construction des «M» premières à l'exception du dernier macro-slot [GS(M+1), ACK] qui ne contient maintenant qu'un seul slot ACK pour transporter des messages de type ACK.

Avec cette structure de trame, le procédé comporte les étapes suivantes.

### Phase A

Un noeud qui n'est pas en émission ou en réception sur un canal DATA écoute les canaux SIG,
A.1. S'il détecte une émission sur le canal de signalisation « n » sur le mini-slot CTS CTS_{n,i} du «i»ème slot d'un des « S» premiers macro-slots GS de la mini-trame courante MFc alors il s'interdit tout accès aux mini-slots RTS du «i»ème slot, RTS_{n,i}, des macro-slots GS sur ce canal de signalisation SIG « n » jusqu'à la fin de la mini-trame courante MFc, il devient ainsi un noeud bloqué en émission au canal DATA «d=(n-1)P+i» correspondant à ce canal de signalisation « n » et à ce slot « i » jusqu'à la fin de la mini-trame courante MFc,
A.2. S'il détecte une émission sur le canal de signalisation « n » sur le mini-slot CTS du «i»ème slot du macro-slot « S+1» [CTS_{n,i}, GS(S+1)] de la mini-trame MFc, alors il s'interdit tout accès aux mini-slots RTS du «i»ème slot, RTS_{n,i}, des macro-slots sur ce canal de signalisation jusqu'à la fin de la mini-trame suivante MFs=MF_{c+1}, il devient ainsi un noeud bloqué en émission sur le canal DATA «d=(n-1)P+i» correspondant à ce canal de signalisation « n » et à ce slot « i » jusqu'à la fin de la mini-trame suivante,
A.3. S'il détecte une émission sur le canal de signalisation « n » sur le slot P-ACK « i » du macro-slot « S+2» [P-ACK_{n,i}, GS(S+2)] de la mini-trame MFc, alors il s'interdit tout accès aux mini-slots RTS du «i»ème slot, RTS_{n,i}, des macro-slots sur ce canal de signalisation jusqu'à la fin de la mini-trame suivante MFs, il devient ainsi un noeud bloqué en émission sur le canal DATA «d=(n-1)P+i» correspondant à ce canal de signalisation « n » et à ce slot « i » jusqu'à la fin de la mini-trame suivante,
A.4. S'il détecte une émission sur le canal de signalisation « n » sur le mini-slot RTS du «i»ème slot d'un des «S» premiers macro-slots de la mini-trame, [RTS_{n,i}, GS(s)] alors il s'interdit tout accès aux mini-slots CTS du «i»ème slot des macro-slots [CTS_{n,i}, GS(s)] sur ce canal de signalisation SIG jusqu'à la fin de la mini-trame courante MFc, il devient ainsi un noeud bloqué en réception sur le canal DATA «d=(n-1)P+i» correspondant à ce canal de signalisation « n » et à ce slot « n » jusqu'à la fin de la mini-trame courante MFc,
A.5. S'il détecte une émission sur le canal de signalisation « n » sur le mini-slot RTS du «i»ème slot du macro-slot «S+1» [RTS_{n,i}, GS(S+1)] de la mini-trame MFc alors il s'interdit tout accès aux mini-slots CTS du «i»ème slot des macro-slots [CTS_{n,i}, GS(s)] sur ce canal SIG jusqu'à la fin de la mini-trame suivante MFs, il devient ainsi un noeud bloqué en réception sur le canal DATA «d=(n-1)P+i»correspondant à ce canal de signalisation « n » et à ce slot « i » jusqu'à la fin de la mini-trame suivante.

### Phase B

Un noeud 10e désirant émettre tire un nombre aléatoire et initie un compte à rebours, K, avec la valeur du nombre tiré. Le noeud écoute en permanence simultanément tous les canaux de SIG. Sur chaque canal de signalisation « n »,
B.1. Le compteur K est décrémenté à chaque slot des macro-slots de signalisation si le noeud 10e ne détecte pas d'émission sur le mini-slot CTS du slot,
B.2. Sur les « S » premiers macro-slots GS de la mini-trame MFc, le compteur K est bloqué et le noeud 10e est bloqué en émission sur le canal de signalisation « n » et sur le slot «i» jusqu'à la fin de la mini-trame courante MFc si le noeud détecte une émission sur le mini-slot CTS du slot «i». Le noeud 10e est bloqué en émission sur le canal DATA«d=(n-1)P+i» correspondant jusqu'à la fin de la mini-trame courante MFc,
B.3. Sur le macro-slot « S+1 », le compteur K est bloqué et le noeud 10e est bloqué en émission sur le canal de signalisation « n » et sur le slot «i» jusqu'à la fin de la mini-trame suivante si le noeud 10e détecte une émission sur le mini-slot CTS du slot «i». Le noeud 10e est bloqué en émission sur le canal DATA «d=(n-1)P+i »correspondant, jusqu'à la fin de la mini-trame suivante MFs,
B.4. Sur le macro-slot « S+2 », le compteur K est bloqué et le noeud 10e est bloqué en émission sur le canal de signalisation « n » et sur le slot «i» jusqu'à la fin de la mini-trame suivante si le noeud 10e détecte une émission sur le slot P-ACK «i». Le noeud 10e est bloqué en émission sur le canal DATA «d=(n-1)P+i» correspondant, jusqu'à la fin de la mini-trame suivante MFs,
B.5. Le compteur K est bloqué durant le dernier slot de chaque trame F. Phase C

À l'expiration du compteur K le noeud 10e émet un message du type RTS pour notifier son souhait d'émettre au destinataire. Cette émission se produit sur le slot « i » et le canal de signalisation « n » correspondant au canal DATA «d=(n-1)P+i» choisi aléatoirement par le noeud émetteur parmi les canaux DATA sur lesquels il n'est pas bloqué en émission. L'émission a lieu,
C.1. Sur le macro-slot suivant l'expiration si le compteur K expire dans les «S» premiers macro-slots de la mini-trame,
C.2. Sur le premier macro-slot de la mini-trame suivante si le compteur K expire au macro-slot «S+1»de la mini-trame courante.

### Phase D

Si le destinataire 10r reçoit correctement le message RTS sur le slot RTS_{n,i} et s'il n'est pas bloqué en réception sur le canal DATA «d=(n-1)P+i» correspondant au slot «i» et au canal SIG « n » utilisé pour l'envoi du message RTS, alors il répond par l'envoi d'un message CTS sur le deuxième mini-slot CTS_{n,i} du slot où a eu lieu l'émission du message RTS et sur le même canal SIG où a eu lieu l'émission du RTS pour indiquer au noeud émetteur qu'il est disponible pour la réception.

### Phase E

E.1. Si le noeud émetteur 10e reçoit correctement le message CTS, alors la transmission des DATA se produit sur le canal DATA «d=(n-1)P+i» correspondant au slot « i » et au canal de signalisation SIG « n » utilisé pour l'échange des messages RTS/CTS. La transmission des données commence,
   E.1.a Au slot suivant si l'échange RTS/CTS a eu lieu dans un slot des «S» premiers macro-slots de la mini-trame courante MFc,
   E.1.b Au slot suivant si l'échange RTS/CTS a eu lieu dans un des « P-1 » slots du macro-slot «S+1» de la mini-trame courante MFc,
   E.1.c Au premier slot du premier macro-slot de la mini-trame suivante MFs si l'échange RTS/CTS a eu lieu au slot «P» du macro-slot « S+1 » de la minitrame courante MFc.

Ainsi, la communication peut commencer à n'importe quel slot de la trame à l'expiration du compteur K et après un échange RTS/CTS réussi, et peut s'étendre sur plusieurs mini-trames, mais se termine obligatoirement à la fin d'une des mini-trames de la trame où la transmission des données a commencé. Le noeud émetteur indique la dernière mini-trame de la transmission des données DATA dans son message RTS.
E.1.f. Si le terminal émetteur 10e ne reçoit pas correctement le message CTS alors il pourra soit abandonner la transmission courante des données, soit essayer à nouveau d'accéder au canal en suivant à nouveau les étapes de C à E jusqu'à recevoir correctement le message CTS. Si le noeud émetteur échoue à recevoir le message CTS après un nombre prédéfini de tentatives alors il abandonne la transmission courante des données,

### Phase F

Le noeud récepteur 10r envoie un message d'acquittement ACK sur le canal DATA utilisé pour la transmission des données à la fin de la dernière mini-trame de transmission, et un message P-ACK sur le canal SIG « n » et sur le slot P-ACK « i », correspondant au canal de DATA «d=(n-1)P+i» utilisé pour la transmission des données, utilisé à la fin de chacune des autres mini-trames intermédiaires de la transmission.

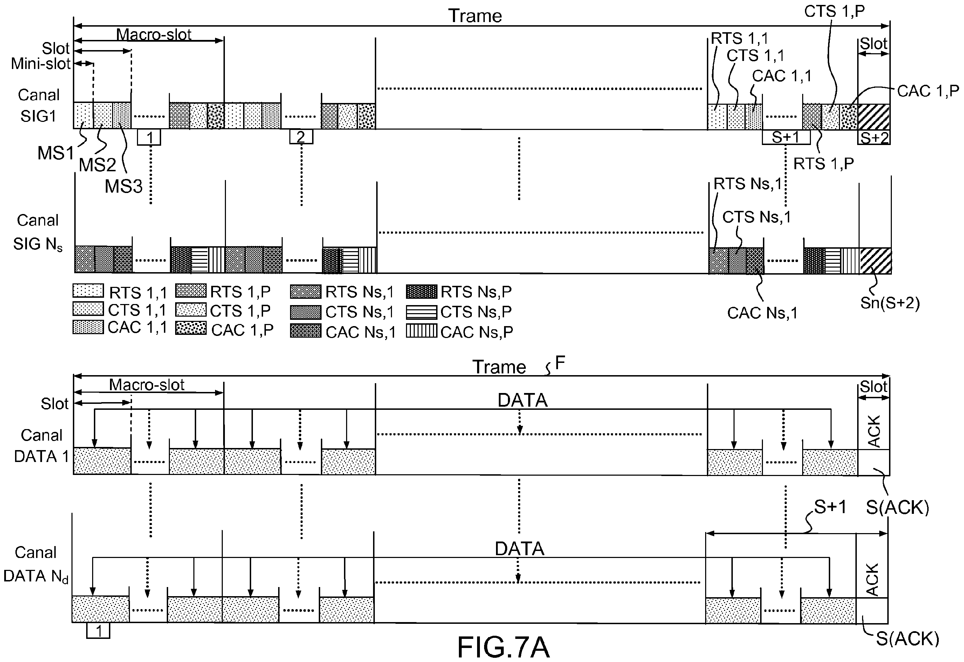

La figure 7A représente une structure de trame pour 'Ns' canaux SIG et 'Nd' canaux DATA distincts avec une validation du RTS. On reprend la trame en TDMA de la variante figure 6.A du protocole et on modifie la trame sur les canaux de signalisation SIG de telle façon que chaque slot s des macro-slots GS est maintenant composé de trois mini-slots: un premier mini-slot MS1 pour l'envoi des messages RTS, un deuxième mini-slot MS2 pour l'envoi des messages CTS, et un troisième mini-slot MS3 pour l'envoi d'un message de type CAC.

### Phase A

Un noeud qui n'est pas en émission ou en réception sur un canal DATA écoute les canaux de SIG,
A.1. S'il détecte une émission sur le canal SIG « n » sur le mini-slot CTS du «i»ème slot d'un des « S» premiers macro-slots de la trame Fc, [CTS_{n,i}, GS] alors il s'interdit tout accès aux mini-slots RTS [RTS_{n,i}, GS] du «i»ème slot des macro-slots sur ce canal de signalisation SIG « n » jusqu'à la fin de la trame courante Fc, il devient ainsi un noeud bloqué en émission au canal DATA «d=(n-1)P+i» correspondant à ce canal de signalisation « n » et à ce slot «i» jusqu'à la fin de la trame courante Fc,
A.2. S'il détecte une émission sur le canal SIG « n » sur le mini-slot CTS du «i»ème slot du macro-slot « S+1» [CTS_{n,i}, GS(S+1)] de la trame Fc, alors il s'interdit tout accès aux mini-slots RTS du «i»ème slot des macro-slots sur ce canal de signalisation « n » jusqu'à la fin de la trame suivante Fs, il devient ainsi un noeud bloqué en émission sur le canal DATA «d=(n-1)P+i» correspondant à ce canal de signalisation « n » et à ce slot « i » jusqu'à la fin de la trame suivante,
A.3. S'il détecte une émission sur le canal SIG « n » sur le mini-slot CAC du «i»ème slot d'un des «S» premiers macro-slots, [CAC_{n,i}, GS(S)] de la trame Fc alors il s'interdit tout accès aux mini-slots CTS du «i»ème slot des macro-slots [CTS_{n,i}, GS(S)] sur ce canal SIG « n » jusqu'à la fin de la trame courante Fc, il devient ainsi un noeud bloqué en réception sur le canal DATA «d=(n-1)P+i» correspondant à ce canal de signalisation « n » et à ce slot « i » jusqu'à la fin de la trame courante Fc,
A.4. S'il détecte une émission sur le canal SIG « n » sur le mini-slot CAC du «i»ème slot du macro-slot «S+1» [CAC_{n,i}, GS(S+1)] de la trame Fc alors il s'interdit tout accès aux mini-slots CTS du «i»ème slot des macro-slots [CTS_{n,i}, GS(S)] sur ce canal SIG « n » jusqu'à la fin de la trame suivante, il devient ainsi un noeud bloqué en réception sur le canal DATA «d=(n-1)P+i» correspondant à ce canal de signalisation « n » et à ce slot « i » jusqu'à la fin de la trame suivante.

### Phase B

Un noeud désirant émettre tire un nombre aléatoire K et initie un compte à rebours avec la valeur du nombre tiré. Le noeud écoute en permanence simultanément tous les canaux de signalisations SIG. Sur chaque canal de signalisation « n »,
B.1. Le compteur K est décrémenté à chaque slot s des macro-slots GS de signalisation si le noeud 10e ne détecte pas d'émission sur le mini-slot CTS du slot,
B.2. Sur les « S » premiers macro-slots de la trame Fc, le compteur K est bloqué et le noeud 10e est bloqué en émission sur le canal de signalisation SIG « n » et sur le slot «i» jusqu'à la fin de la trame courante Fc si le noeud 10e détecte une émission sur le mini-slot CTS du slot «i». Le noeud est bloqué en émission sur le canal DATA «d=(n-1)P+i» correspondant jusqu'à la fin de la trame courante,
B.3. Sur le macro-slot « S+1 », le compteur K est bloqué et le noeud 10e est bloqué en émission sur le canal de signalisation « n » et sur le slot «i» jusqu'à la fin de la trame suivante Fs si le noeud 10e détecte une émission sur le mini-slot CTS du slot «i». Le noeud 10e est bloqué en émission sur le canal DATA «d=(n-1)P+i» correspondant jusqu'à la fin de la trame suivante Fs,
B.4. Le compteur K est bloqué durant le dernier slot de la trame Fc.

### Phase C

À l'expiration du compteur K le noeud 10e émet un message du type RTS pour notifier son souhait d'émettre au destinataire. Cette émission se produit sur le slot « i » et le canal de signalisation « n » correspondant au canal DATA «d=(n-1)P+i» choisi aléatoirement par le noeud émetteur parmi les canaux DATA sur lesquels il n'est pas bloqué en émission. L'émission a lieu, C.1. Sur le macro-slot suivant l'expiration si le compteur expire dans les «S» premiers macro-slots de la trame, C.2. Sur le premier macro-slot de la trame suivante si le compteur expire au macro-slot «S+1 »de la trame.

### Phase D

Si le destinataire 10r reçoit correctement le message RTS et s'il n'est pas bloqué en réception sur le canal DATA «d=(n-1)P+i » correspondant au slot « i » et au canal SIG « n » utilisé pour l'envoi du message RTS, alors il répond par l'envoi d'un message CTS sur le deuxième mini-slot CTS_{n,i} du slot où a eu lieu l'émission du message RTS et sur le même canal SIG « n » où a eu lieu l'émission du RTS pour indiquer au noeud émetteur qu'il est disponible pour la réception.

### Phase E

E.1. Si le noeud émetteur 10e reçoit correctement le message CTS alors il envoie un message de type CAC sur le troisième mini-slot CAC_{n,i} du slot où a eu l'échange RTS/CTS. La transmission des DATA se produit sur le canal DATA «d=(n-1)P+i» correspondant au slot et au canal de signalisation utilisé pour l'échange des messages RTS/CTS. La transmission des données commence au slot suivant si l'échange RTS/CTS a eu lieu dans un des «P-1» premiers slots du macro-slot courant, ou au premier slot du macro-slot suivant si l'échange RTS/CTS a eu lieu au slot «P» du macro-slot courant GSc. La communication peut commencer à n'importe quel slot de la trame à l'expiration du compteur et après un échange réussi RTS/CTS, mais se termine obligatoirement à la fin de la trame où la transmission de DATA a commencé juste avant le slot ACK,
E.2. Si le terminal émetteur ne reçoit pas correctement le message CTS alors il pourra soit abandonner la transmission courante des données soit essayer à nouveau d'accéder au canal en suivant à nouveau les étapes des phases C à E jusqu'à recevoir correctement le message CTS. Si le noeud émetteur échoue à recevoir le message CTS après un nombre prédéfini de tentatives alors il abandonne la transmission courante des données.

### Phase F

Un noeud récepteur envoie sur le canal DATA où a eu lieu sa réception sur le dernier slot de la trame un message du type ACK pour informer l'émetteur de l'état de réception des données,

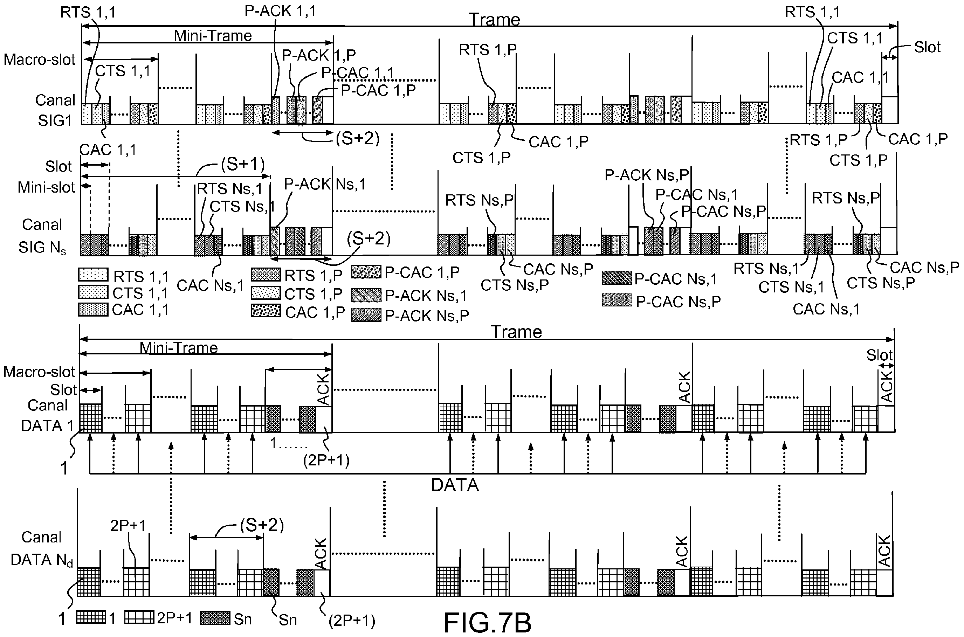

La figure 7B, est une variante de structure de trame multi-trames de la figure 7A. On reprend la trame en TDMA de la variante 6.B du protocole et on modifie la trame sur les canaux de SIG de telle façon que chaque slot des «S+1» premiers macro-slot de chaque mini-trame est maintenant composé de trois mini-slots: un premier mini-slot pour l'envoi des messages RTS, un deuxième mini-slot pour l'envoi des messages CTS, et un troisième mini-slot pour l'envoi d'un message de type CAC. Le dernier macro-slot S+2 des M premières mini-trames sur les canaux SIG est composé maintenant de 2P+1 slots : P slots P-CAC, P slots P-ACK, et un dernier slot non-utilisé. Le dernier macro-slot S+2 des M premières mini-trames sur les canaux de DATA est modifié pour contenir 2P+1 slots : 2P slots non utilisés et un dernier slot ACK.

### Phase A

Un noeud qui n'est pas en émission ou en réception sur un canal DATA écoute les canaux de signalisations SIG
A.1. S'il détecte une émission sur le canal SIG « n » sur le mini-slot CTS du «i»ème slot d'un des « S» premiers macro-slots de la mini-trame courante alors il s'interdit tout accès aux mini-slots RTS du «i»ème slot des macro-slots sur ce canal de signalisation jusqu'à la fin de la mini-trame courante, il devient ainsi un noeud bloqué en émission au canal DATA «d=(n-1)P+i»correspondant à ce canal de signalisation « n » et à ce slot « i » jusqu'à la fin de la mini-trame courante,
A.2.S'il détecte une émission sur le canal SIG « n » sur le mini-slot CTS du «i»ème slot du macro-slot «S+1» de la mini-trame courante alors il s'interdit tout accès aux mini-slots RTS du «i»ème slot des macro-slots sur ce canal de signalisation jusqu'à la fin de la mini-trame suivante, il devient ainsi un noeud bloqué en émission sur le canal DATA «d=(n-1)P+i» correspondant à ce canal de signalisation « n » et à ce slot « i » jusqu'à la fin de la mini-trame suivante,
A.3.S'il détecte une émission sur le canal de signalisation « n » sur le slot P-ACK «i» du macro-slot « S+2» de la mini-trame courante alors il s'interdit tout accès aux mini-slots RTS du «i»ème slot des macro-slots sur ce canal de signalisation jusqu'à la fin de la mini-trame suivante, il devient ainsi un noeud bloqué en émission sur le canal DATA «d=(n-1)P+i» correspondant à ce canal de signalisation « n » et à ce slot « i » jusqu'à la fin de la mini-trame suivante,
A.4. S'il détecte une émission sur le canal SIG « n » sur le mini-slot CAC du «i»ème slot d'un des «S» premiers macro-slots de la mini-trame courante alors il s'interdit tout accès aux mini-slots CTS du «i»ème slot des macro-slots sur ce canal de signalisation jusqu'à la fin de la mini-trame courante, il devient ainsi un noeud bloqué en réception sur le canal DATA «d=(n-1)P+i» correspondant à ce canal de signalisation « n » et à ce slot « i » jusqu'à la fin de la mini-trame courante.
A.5. S'il détecte une émission sur le canal SIG « n » sur le mini-slot CAC du «i»ème slot du macro-slot «S+1» de la mini-trame courante alors il s'interdit tout accès aux mini-slots CTS du «i»ème slot des macro-slots sur ce canal de signalisation jusqu'à la fin de la mini-trame suivante, il devient ainsi un noeud bloqué en réception sur le canal DATA «d=(n-1)P+i» correspondant à ce canal de signalisation « n » et à ce slot « i » jusqu'à la fin de la mini-trame suivante.
A.6. S'il détecte une émission sur le canal SIG « n » sur le slot P-CAC « i » du macro-slot «S+2» de la mini-trame courante alors il s'interdit tout accès aux mini-slots CTS du «i»ème slot des macro-slots sur ce canal de signalisation jusqu'à la fin de la mini-trame suivante, il devient ainsi un noeud bloqué en réception sur le canal DATA «d=(n-1)P+i» correspondant à ce canal de signalisation « n » et à ce slot « i » jusqu'à la fin de la mini-trame suivante.

### Phase B

Un noeud désirant émettre tire un nombre aléatoire et initie un compte à rebours K avec la valeur du nombre tiré. Le noeud écoute en permanence simultanément tous les canaux de SIG. Sur chaque canal de signalisation « n » ,
B.1. Le compteur K est décrémenté à chaque slot des macro-slots de signalisation si le noeud ne détecte pas d'émission sur le mini-slot CTS du slot,
B.2. Sur les « S » premiers macro-slots de la mini-trame, le compteur est bloqué et le noeud est bloqué en émission sur le canal de signalisation « n » et sur le slot «i» jusqu'à la fin de la trame courante si le noeud détecte une émission sur le mini-slot CTS du slot «i». Le noeud est bloqué en émission sur le canal DATA «d=(n-1)P+i»correspondant jusqu'à la fin de la trame courante,
B.3. Sur le macro-slot « S+1 », le compteur est bloqué et le noeud est bloqué en émission sur le canal de signalisation « n » et sur le slot «i» jusqu'à la fin de la mini-trame suivante si le noeud détecte une émission sur le mini-slot CTS du slot «i». Le noeud est bloqué en émission sur le canal DATA «d=(n-1)P+i» correspondant jusqu'à la fin de la mini-trame suivante,
B.4. Sur le macro-slot « S+2 », le compteur est bloqué et le noeud est bloqué en émission sur le canal de signalisation « n » et sur le slot «i» jusqu'à la fin de la mini-trame suivante si le noeud détecte une émission sur le slot P-ACK «i». Le noeud est bloqué en émission sur le canal DATA «d=(n-1)P+i» correspondant jusqu'à la fin de la mini-trame suivante,
B.5. Le compteur est bloqué durant le dernier slot de chaque trame.

### Phase C

A l'expiration du compteur K le noeud émet un message du type RTS pour notifier son souhait d'émettre au destinataire. Cette émission se produit sur le slot « i » et le canal de signalisation « n » correspondant au canal DATA «d=(n-1)P+i»choisi aléatoirement par le noeud émetteur parmi les canaux DATA sur lesquels il n'est pas bloqué en émission. L'émission a lieu,
C.1. Sur le macro-slot suivant l'expiration si le compteur expire dans les «S» premiers macro-slots de la mini-trame,
C.2. Sur le 1^{er} macro-slot de la mini-trame suivante si le compteur expire au macro-slot «S+1»de la mini-trame.

### Phase D

Si le destinataire reçoit correctement le message RTS et s'il n'est pas bloqué en réception sur le canal DATA «d=(n-1)P+i» correspondant au slot « i » et au canal SIG « n » utilisé pour l'envoi du message RTS, alors il répond par l'envoi d'un message CTS sur le deuxième mini-slot CTS_{n,i} du slot « i » où a eu lieu l'émission du message RTS et sur le même canal SIG « n » où a eu lieu l'émission du RTS pour indiquer au noeud émetteur qu'il est disponible pour la réception.

### Phase E

E.1. Si le noeud émetteur reçoit correctement le message CTS alors il envoie un message de type CAC sur le troisième mini-slot CAC_{n,i} du slot « i » où a eu l'échange RTS/CTS. La transmission des DATA se produit sur le canal DATA «d=(n-1)P+i» correspondant au slot « i » et au canal de signalisation « n » utilisés pour l'échange des messages RTS/CTS. La transmission des données commence,
   E.1.a. Au slot suivant si l'échange RTS/CTS a eu lieu dans un slot des «S» premiers macro-slots de la mini-trame,
   E.1.b. Au slot suivant si l'échange RTS/CTS a eu lieu dans un des « P-1 » slots du macro-slot «S+1» de la mini-trame,
   E.1.c. Au premier slot du premier macro-slot de la mini-trame suivante si l'échange RTS/CTS a eu lieu au slot «P» du macro-slot « S+1 » de la mini-trame.
   Ainsi, la communication peut commencer à n'importe quel slot de la trame à l'expiration du compteur et après un échange RTS/CTS réussi, et peut s'étendre sur plusieurs mini-trames, mais se termine obligatoirement à la fin d'une des mini-trames de la trame où la transmission des données a commencé. Le noeud émetteur indique la dernière mini-trame de la transmission des DATA dans son message RTS.
E.2. Si le terminal émetteur ne reçoit pas correctement le message CTS alors il pourra soit abandonner la transmission courante des données soit essayer à nouveau d'accéder au canal en suivant à nouveau les étapes des phases C à E jusqu'à recevoir correctement le message CTS. Si le noeud émetteur échoue à recevoir le message CTS après un nombre prédéfini de tentatives alors il abandonne la transmission courante des données.

### Phase F

Le noeud émetteur envoie un message P-CAC sur le canal SIG « n » et sur le slot P-CAC «i» du dernier slot S+2 de chacune des mini-trames de transmission de données à l'exception de la dernière mini-trame de transmission de données. Le canal SIG « n » et le slot « i » correspondent au canal de DATA « d=(n-1)P+i» utilisé pour la transmission des données.

### Phase G

Le noeud récepteur 10r envoie un message d'acquittement ACK sur le canal DATA utilisé pour la transmission des données à la fin de la dernière mini-trame de transmission, et un message P-ACK sur le canal SIG « n » et sur le slot P-ACK «i» correspondant au canal de DATA «d=(n-1)P+i» utilisé pour la transmission des données utilisé à la fin de chacune des autres mini-trames intermédiaires de la transmission.

### Références

[1] G. Bianchi, "Performance analyis of the ieee 802.11 distributed coordination function," IEEE Journal on Selected Area in Communications, vol. 18, 2000
[2] H. Anouar, C. Bonnet, 'Optimal Constant-Window Backoff Scheme for IEEE 802.11 DCF in General Load Single-Hop Wireless Networks', 9-th ACM/IEEE International Symposium on Modeling, Analysis and Simulation of Wireless and Mobile Systems MSWIM 2006.

## Revendications

1. Procédé d'accès à un canal radio dans un système de communication comportant plusieurs terminaux (10n) communiquant entre eux par des liens radio, un terminal (10n) étant équipé de moyens d'émission et/ou de réception (11n, 12n), d'un processeur (13n) adapté à exécuter les étapes du procédé, ledit procédé utilisant un protocole d'accès basé sur une trame de communication (F) composée de plusieurs slots S(1), .., S(S+2), les S premiers slots comprenant chacun deux mini-slots, le premier mini-slot MS1 comportant un message de signalisation de demande d'émission de données RTS ou des données, le deuxième mini-slot MS2 comprenant un message de signalisation de « prêt à recevoir », CTS, ou des données, le slot (S+1) contenant un message de type RTS ou des données, le slot (S+2) contenant un message de type CTS et un message d'acquittement placé à la fin de la trame afin d'acquitter une ou plusieurs transmissions ayant lieu sur le canal radio.

2. Procédé d'accès à un canal radio selon la revendication 1 **caractérisé en ce qu'**une trame F est divisée en (M+1) mini-trames MF, chaque mini-trame MF présentant la structure de la trame de la revendication 1 et pour les M premières mini-trames le premier mini-slot MS1 du slot (S+2) contient un message CTS ou un message acquittement partiel P-ACK.

3. Procédé d'accès à un canal radio selon la revendication 1 mis en oeuvre dans un système de communication comportant plusieurs terminaux (10n) communiquant entre eux par des liens radio, un terminal (10n) étant équipé de moyens d'émission et/ou de moyens de réception (11n, 12n), d'un processeur (13n) adapté à exécuter les étapes du procédé selon la revendication 1, **caractérisé en ce qu'**il met en oeuvre au moins un canal de signalisation SIG distinct d'un canal de données DATA, qu'il utilise un protocole d'accès basé sur une trame de communication (F) composée de plusieurs slots S(1), .., S(S+2), le canal SIG reprenant les mini-slots de signalisation RTS, [MS1, SIG] et CTS [MS2, SIG] organisés en S+1 slots, le canal DATA reprenant les S+1 slots de données DATA, [S, DATA], et le slot ACK dernier slot S+2 du canal DATA, le dernier slot S+2 sur le canal SIG n'est pas utilisé, les S+1 slots de signalisation du canal SIG correspondant aux S+1 slots de données du canal DATA, le dernier slot non utilisé sur le canal de signalisation SIG correspondant au slot ACK du canal DATA.

4. Procédé d'accès à un canal radio selon la revendication 3 **caractérisé en ce qu'**il utilise au moins un canal de signalisation distinct d'un canal de données, et **en ce qu'**une trame est divisée en (M+1) mini-trames MF et **en ce que** la dernière mini-trame MF(M+1) présente la structure de la trame de la revendication 3, et **en ce que** :
• Pour le canal SIG, on utilise M premières mini-trames composées chacune de (S+2) slots, les (S+1) slots étant composés chacun d'un mini-slot pour les messages RTS et d'un mini-slot pour les messages CTS, le dernier slot contient un mini-slot pour les messages d'acquittement partiel P-ACK et un mini-slot neutralisé,
• Sur le canal DATA, on utilise M premières mini-trames composées chacune de S+2 slots, les S+1 premiers slots sont pour des messages de données, le dernier slot S+2 est composé d'un mini-slot neutralisé et d'un mini-slot pour les messages d'acquittement ACK.

5. Procédé selon la revendication 3 **caractérisé en ce que** la trame F sur le canal de signalisation SIG est composée au niveau des « S+1 » premiers slots, de trois mini-slots distribués de la manière suivante, un premier mini-slot MS1 pour l'envoi des messages RTS, un deuxième mini-slot MS2 pour l'envoi des messages de type CTS, un troisième mini-slot MS3 pour l'envoi des messages de type CAC.

6. Procédé selon la revendication 4 **caractérisé en ce qu'**il utilise une trame composée au niveau des « S+1 » premiers slots de chaque mini-trame MF sur le canal de signalisation, de trois mini-slots distribués de la manière suivante, un premier mini-slot MS1 pour l'envoi des messages RTS, un deuxième mini-slot MS2 pour l'envoi des messages de type CTS, un troisième mini-slot MS3 pour l'envoi des messages de type CAC, le dernier slot (S+2) des M premières mini-trames sur le canal de signalisation SIG est modifié pour contenir trois mini-slots: le premier [MS1(S+2), SIG] pour l'envoi des messages de type P-CAC, le deuxième [MS2(S+2), SIG] pour l'envoi des messages de type P-ACK, et le troisième mini-slot [MS3(S+2), SIG] non-utilisé, le dernier slot S+2 des M premières mini-trames sur le canal de données DATA est modifié pour contenir trois mini-slots : les deux premiers mini-slots ne sont pas utilisés MS1, MS2, et le troisième mini-slot [MS3(S+2), DATA] est réservé à l'envoi des messages ACK.

7. Procédé selon la revendication 3 **caractérisé en ce que** l'on utilise une trame F supportée par «Ns+Nd» canaux radio distincts (fréquence, code, etc...): «Ns» canaux SIG et «Nd» canaux DATA où «Nd» est multiple de «Ns» : «Nd=P*Ns»,
• Sur les canaux SIG, la trame contient «S+1» macro-slots de signalisation RTS/CTS et un dernier slot non-utilisé, chacun des macro-slots de signalisation est composé de «P» slots, et chaque slot est lui-même composé de deux mini-slots,
• Le premier mini-slot transporte des messages de type RTS et le deuxième mini-slot transporte des messages de type CTS,
• Le «i» ème slot de chaque macro-slot sur le «n»ème canal de signalisation est utilisé pour l'échange de signalisation de réservation RTS/CTS pour accéder au «d» ème canal de data tel que «d= (n-1)*P+i»,
• Sur les canaux de DATA, la trame contient «S+1» macro-slots de DATA et un dernier slot d'acquittement ACK, chacun des macro-slots de DATA est lui-même composé de «P» slots de DATA.

8. Procédé selon la revendication 7 **caractérisé en ce que** l'on utilise une trame supportée par «Ns+Nd» canaux radio distincts (fréquence, code, etc...): «Ns» canaux SIG (signalisation) et «Nd» canaux DATA(données), où «Nd» est multiple de «Ns» : «Nd=P*Ns»,
• Sur les canaux de SIG, la trame est divisée en « M+1 » (M >= 0) mini-trames, la dernière mini-trame reprend exactement la forme de la trame SIG de la revendication 7,
• Sur les canaux de SIG, chacune des «M» premières mini-trames est composée de «S+2» macro-slots: «S+1» macro-slots de signalisation RTS/CTS et un dernier macro-slot de signalisation P-ACK, chacun des «S+1» macro-slots de signalisation RTS/CTS est composé de «P» slots, et chacun des «P» slots est lui-même composé de deux mini-slots,
• Le premier mini-slot transporte des messages de type RTS et le deuxième mini-slot transporte des messages de type CTS, le macro-slot de signalisation P-ACK est composé de «P» slots qui transportent des messages de type P-ACK et un dernier slot non utilisé,
• Le «i» ème slot de chaque macro-slot de chaque mini-trame sur le «n»ème canal SIG est utilisé pour l'échange de signalisation de réservation RTS/CTS pour accéder au «d» ème canal DATA tel que «d= (n-1)*P+i»,
• Le «i» ème slot du dernier macro-slot P-ACK de chaque mini-trame sur le «n» ème canal SIG est utilisé pour l'envoi de message P-ACK correspondant au canal DATA «d» tel que «d= (n-1)*P+i»
• Sur les canaux DATA, la trame contient aussi «M+1» (M >= 0) mini-trames, la dernière mini-trame reprend la forme de la trame DATA de la revendication 7,
• Sur les canaux DATA, chacune des «M» premières mini-trames est composée de «S+2» macro-slots: «S+1» macro-slots de DATA et un dernier macro-slot de signalisation ACK,
• Chacun des «S+1» macro-slots de DATA est composé de P slots de DATA, le macro-slot de signalisation ACK est composé de «P» slots non-utilisés et un dernier slot ACK pour transporter des messages de type ACK, la dernière mini-trame reprend la forme de la trame DATA de la revendication 7.

9. Procédé selon la revendication 7 **caractérisé en ce que** pour la trame sur les canaux de SIG, chaque slot des macro-slots est composé de trois mini-slots: un premier mini-slot pour l'envoi des messages RTS, un deuxième mini-slot pour l'envoi des messages CTS, et un troisième mini-slot pour l'envoi d'un message de type CAC.

10. Procédé selon la revendication 8 **caractérisé en ce que** l'on modifie la trame sur les canaux de signalisation de façon telle que chaque slot des « S+1 » premiers macro-slots de chaque mini-trame sur les canaux de signalisation est maintenant composé de trois mini-slots: un premier mini-slot pour l'envoi des messages RTS, un deuxième mini-slot pour l'envoi des messages CTS, et un troisième mini-slot pour l'envoi d'un message de type CAC, le dernier macro-slot (S+2) des M premières mini-trames sur les canaux SIG est composé maintenant de 2P+1 slots : P slots P-CAC, P slots P-ACK, et un dernier slot non-utilisé, le dernier macro-slot (S+2) des M premières mini-trames MF sur les canaux de DATA est modifié pour contenir 2P+1 slots : 2P slots non utilisés et un dernier slot ACK.

11. Trame pour utilisation dans un réseau synchrone avec accès en TDMA, comportant un nombre « S+2 » de slots, sa structure comportant au moins les éléments suivants :
• Les «S» premiers slots contiennent chacun deux mini-slots MS1(s), MS2(s), le premier mini-slot MS1(s) contient un message de signalisation de type RTS ou données, le deuxième mini-slot MS2(s) contient un message de signalisation CTS ou des données,
• Le premier mini-slot MS1(S+1) du slot « S+1» contient un message RTS ou des données,
• Le deuxième mini-slot MS2(S+1) contient des données,
• Le premier mini-slot MS1(S+2) du slot « S+2» contient un message de type CTS,
• Le deuxième mini-slot MS2(S+2) contient un message de signalisation d'acquittement de type ACK.

12. Trame selon la revendication 11 **caractérisée en ce qu'**elle comporte en plus les éléments suivants :
• La trame est divisée en « M+1 » (M >= 0) mini-trames MF(f),
• La dernière mini-trame MF(F+1) reprend exactement la forme de la trame selon la revendication 11,
• Les «S» premiers slots de chaque mini-trame MF contiennent chacun deux mini-slots MS1, MS2,
• Le premier mini-slot MS1(s) de chaque slot s contient un message de signalisation de type RTS, ou des données,
• Le deuxième mini-slot MS2(s) de chaque slot s contient un message de signalisation de type CTS, ou des données,
• Le premier mini-slot du slot « S+1» de chaque mini-trame [MS1(S+1), MF] contient un message RTS ou des données,
• Le deuxième mini-slot [MS2(S+1), MF] contient des données,
• Le dernier slot «S+2» d'une mini-trame MF est défini comme suit:
• Dans les « M» premières mini-trames: le premier mini-slot du slot «S+2», MS1(S+2) de chaque mini-trame MF contient des messages de signalisation de type CTS ou P-ACK (Partial ACK), le deuxième mini-slot « S+2», MS2(S+2), contient un message de signalisation d'acquittement de type ACK,
• Dans la dernière mini-trame MF(F+1): le premier mini-slot [MS1 (S+2), MF(F+1)] du slot « S+2» contient un message de type CTS, le deuxième mini-slot [MS2(S+2), MF(F+1)] contient un message de signalisation d'acquittement de type ACK.

13. Trame selon la revendication 11 destinée à être utilisée dans un réseau synchrone avec accès en TDMA mettant en oeuvre au moins un canal de signalisation SIG distinct d'un canal de données DATA **caractérisée en ce qu'**elle comporte au moins les éléments suivants :
• La trame est supportée par deux canaux radio distincts, un canal de signalisation SIG et un canal de données DATA distinct du canal de signalisation,
• le canal SIG reprend les mini-slots de signalisation RTS et CTS organisés en S+1 slots, le dernier slot S+2 sur le canal SIG n'est pas utilisé,
• le canal DATA reprend les S+1 slots de données DATA et le slot d'acquittement ACK,
• les S+1 slots de signalisation du canal SIG correspondent aux S+1 slots de données du canal DATA, le dernier slot non utilisé sur le canal SIG correspond au slot ACK du canal DATA.

14. Trame selon la revendication 13 **caractérisée en ce qu'**elle comporte au moins les éléments suivants :
• la trame F est divisée en M+1 mini-trames MF(1),.., MF(M+1) sur un canal de signalisation et un canal de données distincts avec M supérieur ou égal à zéro,
• la dernière mini-trame MF(M+1) reprend exactement la forme de la trame selon la revendication 12,
• le canal de signalisation SIG reprend les slots de signalisation RTS, CTS, et P-ACK, le canal de données DATA reprend les slots de données et les slots ACK,
• sur le canal de signalisation SIG, les «M» premières mini-trames MF sont composées chacune de S+2 slots,
• les «S+1» premiers slots sont composés chacun d'un mini-slot pour les messages RTS, [MS1, MF, SIG] et d'un mini-slot pour les messages CTS, [MS2, MF, SIG],
• le dernier slot (S+2) contient un premier mini-slot [MS1(S+2), MF, SIG] pour les messages d'acquittement partiel P-ACK et un deuxième mini-slot [MS2(S+2), SIG] neutralisé (non-utilisé) [MSn, MF(M+1)],
• la dernière mini-trame MF+1 reprend exactement la forme de la trame du canal SIG de la revendication 12 excepté le dernier slot qui ne contient qu'un mini-slot neutralisé,
• sur le canal DATA, les «M» premières mini-trames sont composées chacune de « S+2» slots,
• les «S+1» premiers slots sont pour les messages de données DATA tandis que le dernier slot d'une mini-trame est composé d'un mini-slot neutralisé MSn(S+2) et d'un mini-slot MSa(S+2) pour les messages d'acquittement ACK.

15. Trame selon la revendication 13 **caractérisée en ce que** pour la trame sur le canal de signalisation chaque slot des «S+1» premiers slots de signalisation est composé de trois mini-slots: un premier mini-slot MS1 pour l'envoi des messages RTS, un deuxième mini-slot MS2 pour l'envoi des messages CTS, et un troisième mini-slot MS3 pour l'envoi des messages de type confirmation de l'accès au canal ou CAC.

16. Trame selon la revendication 14 **caractérisée en ce que** la trame comprend M+1 (M>=0) mini-trames :
• chaque slot des «S+1» premiers slot de chaque mini-trame est composé de trois mini-slots: un premier mini-slot MS1 pour l'envoi des messages RTS, un deuxième mini-slot MS2 pour l'envoi des messages CTS, et un troisième mini-slot MS3 pour l'envoi d'un message de type CAC,
• le dernier slot S+2 des M premières mini-trames sur le canal SIG est modifié pour contenir trois mini-slots : le premier pour l'envoi des messages de type P-CAC, le deuxième pour l'envoi des messages de type P-ACK, et un troisième mini-slot non-utilisé,
• Le dernier slot S+2 des M premières mini-trames sur le canal de données DATA est modifié pour contenir trois mini-slots : les deux premiers mini-slots ne sont pas utilisés, et le troisième mini-slot est réservé à l'envoi des messages ACK.

17. Trame selon la revendication 13 **caractérisée en ce qu'**elle est supportée par Ns canaux de signalisation et par Nd canaux de données où Nd est multiple de «Ns» : «Nd=P*Ns»,
• La trame contient «S+1» macro-slots de signalisation RTS/CTS, [GS, SIG] et un dernier slot non-utilisé Sn(S+2), chacun des macro-slots de signalisation [GS, SIG] est composé de «P» slots, et chaque slot est lui-même composé de deux mini-slots RTS_{n, i}, CTS_{n,i} avec n le numéro de canal et i le numéro de slot dans un macro-slot GS,
• Le premier mini-slot RTS_{n, i} transporte des messages de type RTS et le deuxième mini-slot CTS_{n, i} transporte des messages de type CTS,
• Le «i»ème slot de chaque macro-slot GS sur un «n» ème canal de signalisation SIG est utilisé pour l'échange de signalisation de réservation RTS/CTS pour accéder au «d»ème canal de data tel que «d= (n-1 )*P+i»,
• Sur les canaux de DATA, la trame contient «S+1» macro-slots de DATA et un dernier slot d'acquittement ACK S(ACK),
• Chacun des macro-slots de DATA est lui-même composé de «P» slots de DATA.

18. Trame selon la revendication 17 **caractérisée en ce qu'**elle est divisée en multi-trames et supportée par «Ns+Nd» canaux radio distincts (fréquence, code, etc...): «Ns» canaux SIG (signalisation) et «Nd» canaux DATA (données), où «Nd» est multiple de «Ns» : «Nd=P*Ns»,
• une trame de signalisation est divisée en « M+1 » (M >= 0) mini-trames de signalisation, la dernière mini-trame MF (M+1) est obligatoire et reprend la forme de la trame de la revendication 17,
• Sur les canaux de SIG, chacune des «M» premières mini-trames MF de signalisation est composée de «S+2» macro-slots GS: «S+1» macro-slots de signalisation RTS/CTS GS(RTS/CTS) et un dernier macro-slot de signalisation P-ACK, GS(P-ACK),
• Chacun des «S+1» macro-slots de signalisation RTS/CTS est composé de «P» slots, et chacun des «P» slots est lui-même composé de deux mini-slots, MS1=RTS_{n,i}, MS2=CTS_{n,i} avec n le numéro de canal de signalisation et i le numéro ou position du slot dans un macro-slot, le premier mini-slot RTS_{n,i} transporte des messages de type RTS et le deuxième mini-slot CTS_{n,i} transporte des messages de type CTS,
• Le macro-slot de signalisation P-ACK GS(P-ACK_{n,i}) est composé de «P» slots qui transportent des messages de type P-ACK et un dernier slot non utilisé Sn, la dernière mini-trame MF(M+1) reprend la construction des «M» premières trames à l'exception du dernier macro-slot qui ne contient qu'un seul slot non utilisé [Sn, MF(M+1)],
• Le «i»ème slot de chaque macro-slot GS de chaque mini-trame MF sur un «n»ème canal SIG est utilisé pour l'échange de signalisation de réservation RTS/CTS pour accéder au «d»ème canal DATA tel que «d= (n-1)*P+i»,
• Le «i»ème slot du dernier macro-slot P-ACK, GS(P-ACK_{n,i}) de chaque mini-trame MF sur un «n»ème canal SIG comporte un message P-ACK correspondant au canal DATA «d» tel que «d= (n-1)*P+i»,
• une trame contient aussi «M+1» (M >= 0) mini-trames MF,
• La dernière mini-trame reprend exactement la forme de la trame DATA de la revendication 17,
• chacune des «M» premières mini-trames MF de données est composée de «S+2» macro-slots: «S+1» macro-slots de DATA et un dernier macro-slot de signalisation ACK,
• Chacun des «S+1» macro-slots de DATA est composé de P slots de DATA, le macro-slot de signalisation ACK est composé de «P» slots non-utilisés Sn et un dernier slot ACK comprenant des messages de type ACK,
• La dernière mini-trame MF(M+1) reprend la construction des «M» premières à l'exception du dernier macro-slot [GS(M+1), ACK] qui ne contient maintenant qu'un seul slot ACK comprenant des messages de type ACK.

19. Trame selon la revendication 17 **caractérisée en ce qu'**elle est supportée par 'Ns' canaux SIG et 'Nd' canaux DATA distincts avec une validation du RTS et **en ce que** sur les canaux de signalisation SIG, chaque slot s des macro-slots GS de signalisation est composé de trois mini-slots: un premier mini-slot MS1 comprenant des messages RTS, un deuxième mini-slot MS2 comprenant des messages CTS, et un troisième mini-slot MS3 comprenant un message de type CAC.

20. Trame selon la revendication 18 **caractérisée en ce que** la trame a une structure multi-trames et **en ce que** :
• chaque slot de signalisation des «S+1» premiers macro-slot de chaque mini-trame est maintenant composé de trois mini-slots: un premier mini-slot comprenant des messages RTS, un deuxième mini-slot comprenant des messages CTS, et un troisième mini-slot comprenant un message de type CAC,
• Le dernier macro-slot S+2 des M premières mini-trames de signalisation est composé de 2P+1 slots : P slots P-CAC, P slots P-ACK, et un dernier slot non-utilisé,
• Le dernier macro-slot S+2 des M premières mini-trames de signalisation contient 2P+1 slots : 2P slots non utilisés et un dernier slot ACK.

## Patentansprüche

1. Zugangsverfahren zu einem Funkkanal in einem Kommunikationssystem, welches mehrere Endgeräte (10n) beinhaltet, welche untereinander über Funkverbindungen kommunizieren, wobei ein Endgerät (10n) mit Sendemitteln und/oder Empfangsmitteln (11n, 12n) und einem Prozessor (13n) ausgestattet ist, welcher geeignet ist, die Schritte des Verfahrens auszuführen, wobei das Verfahren ein Zugangsprotokoll verwendet, welches auf einem Kommunikationsrahmen (F) beruht, welcher aus mehreren Slots S(1), .., S(S+2) besteht, wobei die S ersten Slots jeweils zwei Mini-Slots beinhalten, wobei der erste Mini-Slot MS1 eine Signalisierungsmeldung einer RTS-Datensendeanfrage oder Daten beinhaltet, der zweite Mini-Slot MS2 eine Signalisierungsmeldung der "Empfangsbereitschaft", CTS, oder Daten beinhaltet, der Slot (S+1) eine Meldung vom Typ RTS oder Daten enthält, der Slot (S+2) eine Meldung vom Typ CTS und eine am Ende des Rahmens platzierte Quittierungs-Meldung enthält, um eine oder mehrere Übertragungen zu quittieren, die auf dem Funkkanal stattfinden.

2. Zugangsverfahren zu einem Funkkanal nach Anspruch 1, **dadurch gekennzeichnet, dass** ein Rahmen F in (M+1) Mini-Rahmen MF unterteilt ist, wobei jeder Mini-Rahmen MF die Rahmenstruktur nach Anspruch 1 besitzt und bei den M ersten Mini-Rahmen der erste Mini-Slot MS1 des Slots (S+2) eine CTS-Meldung oder eine Teil-Quittierungsmeldung P-ACK enthält.

3. Zugangsverfahren zu einem Funkkanal nach Anspruch 1, welches in einem Kommunikationssystem umgesetzt wird, welches mehrere Endgeräte (10n) welche untereinander über Funkverbindungen kommunizieren, wobei ein Endgerät (10n) mit Sendemitteln und/oder Empfangsmitteln (11n, 12n) und einem Prozessor (13n) ausgestattet ist, welcher geeignet ist, die Schritte des Verfahrens nach Anspruch 1 auszuführen, **dadurch gekennzeichnet, dass** es mindestens einen Signalisierungskanal SIG verwendet, welcher sich von einem Datenkanal DATA unterscheidet, dass es ein Zugangsprotokoll, basierend auf einem Kommunikationsrahmen (F), verwendet, welcher aus mehreren Slots S(1), .., S(S+2) besteht, wobei der SIG-Kanal die Signalisierungs-Mini-Slots RTS, [MS1, SIG] und CTS [MS2, SIG] übernimmt, welche in S+1 Slots gegliedert sind, der DATA-Kanal die S+1 Daten-Slots DATA, [S, DATA], und den letzten ACK-Slot übernimmt, den letzten Slot S+2 des DATA-Kanals, wobei der letzte Slot S+2 auf dem SIG-Kanal nicht benutzt wird, die S+1 Signalisierungs-Slots des SIG-Kanals den S+1 Daten-Slots des DATA-Kanals entsprechen, wobei der letzte, nicht verwendete Slot auf dem Signalisierungskanal SIG dem Slot ACK des DATA-Kanals entspricht.

4. Zugangsverfahren zu einem Funkkanal nach Anspruch 3, **dadurch gekennzeichnet, dass** es mindestens einen von einem Datenkanal unterschiedlichen Signalisierungskanal verwendet, und dadurch, dass ein Rahmen in (M+1) Mini-Rahmen MF unterteilt ist und dass der letzte Mini-Rahmen MF(M+1) die Struktur des Rahmens nach Anspruch 3 aufweist, und dadurch, dass:
• man für den SIG-Kanal M erste Mini-Rahmen verwendet, jeweils bestehend aus (S+2) Slots, wobei die (S+1) Slots jeweils aus einem Mini-Slot für die RTS-Meldungen und einem Mini-Slot für die CTS-Meldungen bestehen, wobei der letzte Slot einen Mini-Slot für die Teil-Quittierungsmeldungen P-ACK und einen neutralisierten Mini-Slot enthält,
• man auf dem DATA-Kanal M erste Mini-Rahmen verwendet, jeweils bestehend aus S+2 Slots, wobei die S+1 ersten Slots für Datenmeldungen bestimmt sind, wobei der letzte Slot S+2 aus einem neutralisierten Mini-Slot und einem Mini-Slot für die Quittierungs-Meldungen ACK besteht.

5. Verfahren nach Anspruch 3, **dadurch gekennzeichnet, dass** der Rahmen F auf dem Signalisierungskanal SIG auf Höhe der "S+1" ersten Slots aus drei Mini-Slots besteht, die sich wie folgt verteilen: in einen ersten Mini-Slot MS1 zum Senden von RTS-Meldungen, einen zweiten Mini-Slot MS2 zum Senden der Meldungen vom Typ CTS und einen dritten Mini-Slot MS3 zum Senden der Meldungen vom Typ CAC.

6. Verfahren nach Anspruch 4, **dadurch gekennzeichnet, dass** es einen Rahmen verwendet, welcher auf Höhe der "S+1" ersten Slots eines jeden Mini-Rahmens MF auf dem Signalisierungskanal aus drei Mini-Slots besteht, die sich wie folgt verteilen in einen ersten Mini-Slot MS1 zum Senden von RTS-Meldungen, einen zweiten Mini-Slot MS2 zum Senden der Meldungen vom Typ CTS und einen dritten Mini-Slot MS3 zum Senden von Meldungen vom Typ CAC, wobei der letzte Slot (S+2) der M ersten Mini-Rahmen auf dem Signalisierungskanal SIG modifiziert ist, um drei Mini-Slots zu enthalten: den ersten [MS1 (S+2), SIG] zum Senden von Meldungen vom Typ P-CAC, den zweiten [MS2(S+2), SIG] zum Senden von Meldungen vom Typ P-ACK, und den dritten Mini-Slot [MS3(S+2), SIG], welcher nicht benutzt wird, wobei der letzte Slot S+2 der M ersten Mini-Rahmen auf dem Datenkanal DATA modifiziert ist, um drei Mini-Slots zu enthalten: wobei die beiden ersten Mini-Slots MS1, MS2 nicht benutzt werden, und der dritte Mini-Slot [MS3(S+2), DATA] der Sendung der ACK-Meldungen vorbehalten ist.

7. Verfahren nach Anspruch 3, **dadurch gekennzeichnet, dass** man einen Rahmen F benutzt, der von "Ns+Nd" unterschiedlichen Funkkanälen (Frequenz, Code usw.) unterstützt wird: "Ns" SIG-Kanäle und "Nd" DATA-Kanäle, wobei "Nd" ein Vielfaches von "Ns" ist: "Nd=P*Ns",
• wobei auf den SIG-Kanälen der Rahmen "S+1" Makro-Slots zur Signalisierung von RTS/CTS und einen letzten Slot enthält, der nicht benutzt wird, wobei jeder der Signalisierungs-Makro-Slots aus "P" Slots besteht, und wobei jeder Slot wiederum aus zwei Mini-Slots besteht,
• wobei der erste Mini-Slot Meldungen vom Typ RTS transportiert und der zweite Mini-Slot Meldungen vom Typ CTS transportiert,
• wobei der "i"-te Slot eines jeden Makro-Slots auf dem "n"-ten Signalisierungskanal zum Austausch von RTS-/CTS-Reservierungs-Signalisierung zwecks Zugang zum "d"-ten Datakanal verwendet wird, so dass die Gleichung " d= (n-1)*P+i" zutrifft,
• wobei auf den DATA-Kanälen der Rahmen "S+1" DATA-Makro-Slots und einen letzten Quittierungs-Slot, ACK, enthält, wobei jeder der DATA-Makro-Slots seinerseits aus "P" DATA-Slots besteht.

8. Verfahren nach Anspruch 7, **dadurch gekennzeichnet, dass** man einen Rahmen benutzt, der von "Ns+Nd" unterschiedlichen Funkkanälen (Frequenz, Code usw.) unterstützt wird: "Ns" SIG-Kanäle (Signalisierung) und "Nd" DATA-Kanäle (Daten), wobei "Nd" ein Vielfaches von "Ns" ist: "Nd=P*Ns",
• wobei auf den SIG-Kanälen der Rahmen in "M+1" (M >= 0) Mini-Rahmen unterteilt ist, wobei der letzte Mini-Rahmen genau die Form des Rahmens SIG von Anspruch 7 übernimmt,
• wobei auf den SIG-Kanälen jeder der "M" ersten Mini-Rahmen aus "S+2" Makro-Slots besteht: "S+1" Makro-Slots zur Signalisierung von RTS/CTS und einem letzten Makro-Slot zur Signalisierung von P-ACK, wobei jeder der "S+1" Makro-Slots zur Signalisierung von RTS/CTS aus "P" Slots besteht, und jeder der "P" Slots seinerseits aus zwei Mini-Slots besteht,
• wobei der erste Mini-Slot Meldungen vom Typ RTS transportiert und der zweite Mini-Slot Meldungen vom Typ CTS transportiert, der Makro-Slot zur Signalisierung von P-ACK aus "P" Slots besteht, welche Meldungen vom Typ P-ACK transportieren und aus einem letzten, nicht benutzen Slot,
• wobei der "i"-te Slot eines jeden Makro-Slots eines jeden Mini-Rahmens auf dem "n"-ten SIG-Kanal zum Austausch von RTS-/CTS-Reservierungs-Signalisierung zwecks Zugang zum "d"-ten Kanal DATA verwendet wird, so dass die Gleichung " d= (n-1)*P+i" zutrifft,
• wobei der "i"-te Slot des letzten Makro-Slots P-ACK eines jeden Mini-Rahmens auf dem "n"-ten SIG-Kanal zum Senden der P-ACK-Meldung verwendet wird, welche dem DATA-Kanal "d" entspricht, so dass die Gleichung " d= (n-1)*P+i" zutrifft,
• wobei auf den DATA-Kanälen der Rahmen ebenfalls "M+1" (M >= 0) Mini-Rahmen enthält, wobei der letzte Mini-Rahmen die Form des Rahmens DATA von Anspruch 7 übernimmt,
• wobei auf den DATA-Kanälen jeder der "M" ersten Mini-Rahmen aus "S+2" Makro-Slots besteht: "S+1" DATA-Makro-Slots, und einem letzten Signalisierungs-Makro-Slot ACK,
• wobei jeder der "S+1" DATA-Makro-Slots aus P DATA-Slots besteht, wobei der Signalisierungs-Makro-Slot ACK aus "P" nicht benutzten Slots und einem letzten ACK-Slot zum Transportieren von Meldungen vom Typ ACK besteht, wobei der letzte Mini-Rahmen die Form des DATA-Rahmens von Anspruch 7 übernimmt.

9. Verfahren nach Anspruch 7, **dadurch gekennzeichnet, dass** für den Rahmen auf den SIG-Kanälen jeder Slot der Makro-Slots aus drei Mini-Slots besteht: einem ersten Mini-Slot zum Senden der RTS-Meldungen, einem zweiten Mini-Slot zum Senden der CTS-Meldungen und einem dritten Mini-Slot zum Senden einer Meldung vom Typ CAC.

10. Verfahren nach Anspruch 8, **dadurch gekennzeichnet, dass** man den Rahmen auf den Signalisierungskanälen so modifiziert, dass jeder Slot der "S+1" ersten Makro-Slots eines jeden Mini-Rahmens auf den Signalisierungskanälen jetzt aus drei Mini-Slots besteht: einem ersten Mini-Slot zum Senden von RTS-Meldungen, einem zweiten Mini-Slot zum Senden der CTS-Meldungen und einem dritten Mini-Slot zum Senden von Meldungen vom Typ CAC, wobei der letzte Makro-Slot (S+2) der M ersten Mini-Rahmen auf den SIG-Kanälen jetzt aus 2P+1 Slots besteht: P P-CAC-Slots, P P-ACK-Slots und einem letzten, nicht benutzten Slot, wobei der letzte Makro-Slot (S+2) der M ersten Mini-Rahmen MF auf den DATA-Kanälen modifiziert ist, um 2P+1 Slots zu enthalten: 2P Slots, die nicht benutzt werden und einen letzten ACK-Slot.

11. Rahmen zur Verwendung in einem synchronen Netzwerk mit TDMA-Zugang, beinhaltend eine Anzahl von "S+2" Slots, dessen Struktur mindestens folgende Elemente beinhaltet:
• Die "S" ersten Slots enthalten jeweils zwei Mini-Slots MS1(s), MS2(s), der erste Mini-Slot MS1(s) enthält eine Signalisierungsmeldung vom Typ RTS oder Daten und der zweite Mini-Slot MS2(s) eine Signalisierungsmeldung vom Typ CTS oder Daten,
• Der erste Mini-Slot MS1 (S+1) des Slots "S+1" enthält eine RTS-Meldung oder Daten,
• Der zweite Mini-Slot MS2(S+1) enthält Daten,
• Der erste Mini-Slot MS1 (S+2) des Slots "S+2" enthält eine Meldung vom Typ CTS,
• Der zweite Mini-Slot MS2(S+2) enthält eine Quittierungs-Signalisierungsmeldung vom Typ ACK.

12. Rahmen nach Anspruch 11, **dadurch gekennzeichnet, dass** er zudem folgende Elemente beinhaltet:
• Der Rahmen ist in "M+1" (M >= 0) Mini-Rahmen MF(f) unterteilt,
• Der letzte Mini-Rahmen MF(F+1) übernimmt genau die Form des Rahmens nach Anspruch 11,
• Die "S" ersten Slots eines jeden Mini-Rahmens MF enthalten jeweils zwei Mini-Slots MS1, MS2,
• Der erste Mini-Slot MS1(s) eines jeden Slots s enthält eine Signalisierungsmeldung vom Typ RTS oder Daten,
• Der zweite Mini-Slot MS2(s) eines jeden Slots s enthält eine Signalisierungsmeldung vom Typ CTS oder Daten,
• Der erste Mini-Slot des Slots "S+1" eines jeden Mini-Rahmens [MS1 (S+1), MF] enthält eine RTS-Meldung oder Daten,
• Der zweite Mini-Slot [MS2(S+1), MF] enthält Daten,
• Der letzte Slot "S+2" eines Mini-Rahmens MF ist folgendermaßen definiert:
• in den "M" ersten Mini-Rahmen: enthält der erste Mini-Slot des Slots "S+2", MS1 (S+2) eines jeden Mini-Rahmens MF Signalisierungsmeldungen vom Typ CTS oder P-ACK (Partial ACK), und der zweite Mini-Slot "S+2", MS2(S+2) enthält eine Quittierungs-Signalisierungsmeldung vom Typ ACK,
• im letzten Mini-Rahmen MF(F+1): enthält der erste Mini-Slot [MS1(S+2), MF(F+1)] des Slots "S+2" eine Meldung vom Typ CTS und der zweite Mini-Slot [MS2(S+2), MF(F+1)] enthält eine Quittierungs-Signalisierungsmeldung vom Typ ACK.

13. Rahmen nach Anspruch 11, bestimmt zur Verwendung in einem synchronen Netzwerk mit TDMA-Zugang, welches mindestens einen Signalisierungskanal SIG verwendet, welcher sich von einem Datenkanal DATA unterscheidet, **dadurch gekennzeichnet, dass** er mindestens folgende Elemente beinhaltet:
• Der Rahmen wird durch zwei unterschiedliche Funkkanäle unterstützt, einen Signalisierungskanal SIG und einen Datenkanal DATA, welcher sich vom Signalisierungskanal unterscheidet,
• Der SIG-Kanal übernimmt die Mini-Slots zur Signalisierung von RTS und CTS, welche in S+1 Slots gegliedert sind, der letzte Slot S+2 auf dem SIG-Kanal wird nicht benutzt,
• Der DATA-Kanal übernimmt die S+1 Daten-Slots DATA und den Quittierungs-Slot ACK,
• Die S+1 Signalisierungs-Slots des SIG-Kanals entsprechen den S+1 Daten-Slots des DATA-Kanals, der letzte, nicht benutzte Slot auf dem SIG-Kanal entspricht dem ACK-Slot des DATA-Kanals.

14. Rahmen nach Anspruch 13, **dadurch gekennzeichnet, dass** er mindestens folgende Elemente beinhaltet:
• Der Rahmen F ist in M+1 Mini-Rahmen MF(1),.., MF(M+1) unterteilt auf einem Signalisierungs- und einem Datenkanal, welche sich voneinander unterscheiden, wobei M größer als oder gleich null ist,
• Der letzte Mini-Rahmen MF(M+1) übernimmt genau die Form des Rahmens nach Anspruch 12,
• Der Signalisierungskanal SIG übernimmt die Slots zur Signalisierung von RTS, CTS, und P-ACK, der Datenkanal DATA übernimmt die Daten-Slots und die ACK-Slots,
• Auf dem Signalisierungskanal SIG bestehen die "M" ersten Mini-Rahmen MF jeweils aus S+2 Slots,
• Die "S+1" ersten Slots bestehen jeweils aus einem Mini-Slot für die RTS-Meldungen, [MS1, MF, SIG] und einem Mini-Slot für die CTS-Meldungen, [MS2, MF, SIG],
• Der letzte Slot (S+2) enthält einen ersten Mini-Slot [MS1(S+2), MF, SIG] für die Teil-Quittierungs-Meldungen P-ACK und einen zweiten, neutralisierten Mini-Slot [MS2(S+2), SIG] (nicht benutzt) [MSn, MF(M+1)],
• Der letzte Mini-Rahmen MF+1 übernimmt genau die Form des Rahmens des SIG-Kanals von Anspruch 12 mit Ausnahme des letzten Slots, welcher nur einen neutralisierten Mini-Slot enthält,
• Auf dem DATA-Kanal bestehen die "M" ersten Mini-Rahmen jeweils aus "S+2" Slots,
• Die "S+1" ersten Slots sind für die Datenmeldungen DATA bestimmt, während der letzte Slot eines Mini-Rahmens aus einem neutralisierten Mini-Slot MSn(S+2) und einem Mini-Slot MSa(S+2) für die Quittierungs-Meldungen ACK besteht.

15. Rahmen nach Anspruch 13, **dadurch gekennzeichnet, dass** für den Rahmen auf dem Signalisierungskanal jeder Slot der "S+1" ersten Signalisierungs-Slots aus drei Mini-Slots besteht: einem ersten Mini-Slot MS1 zum Senden der RTS-Meldungen, einem zweiten Mini-Slot MS2 zum Senden der CTS-Meldungen und einem dritten Mini-Slot MS3 zum Senden von Meldungen vom Typ Zugangsbestätigung zum Kanal oder CAC.

16. Rahmen nach Anspruch 14, **dadurch gekennzeichnet, dass** der Rahmen M+1 (M>=0) Mini-Rahmen beinhaltet:
• wobei jeder Slot der "S+1" ersten Slots eines jeden Mini-Rahmens aus drei Mini-Slots besteht: einem ersten Mini-Slot MS1 zum Senden der RTS-Meldungen, einem zweiten Mini-Slot MS2 zum Senden der CTS-Meldungen und einem dritten Mini-Slot MS3 zum Senden einer Meldung vom Typ CAC,
• wobei der letzte Slot S+2 der M ersten Mini-Rahmen auf dem SIG-Kanal modifiziert ist, um drei Mini-Slots zu enthalten: den ersten zum Senden der Meldungen vom Typ P-CAC, den zweiten zum Senden von Meldungen vom Typ P-ACK und einen dritten, nicht benutzten Mini-Slot,
• wobei der letzte Slot S+2 der M ersten Mini-Rahmen auf dem Datenkanal DATA modifiziert ist, um drei Mini-Slots zu enthalten: wobei die beiden ersten Mini-Slots nicht benutzt werden und der dritte Mini-Slot der Sendung der ACK-Meldungen vorbehalten ist.

17. Rahmen nach Anspruch 13, **dadurch gekennzeichnet, dass** er durch Ns Signalisierungskanäle und Nd Datenkanäle unterstützt wird, wobei Nd ein Vielfaches von "Ns" ist: "Nd=P*Ns",
• wobei der Rahmen "S+1" Makro-Slots zur Signalisierung von RTS/CTS, [GS, SIG] und einen letzten, nicht benutzten Slot Sn(S+2) enthält, wobei jeder der Signalisierungs-Makro-Slots [GS, SIG] aus "P" Slots besteht, und jeder Slot seinerseits aus zwei Mini-Slots RTS_{n,i}, CTS_{n,i} besteht, wobei n die Kanal-Nummer ist und i die Slot-Nummer in einem Makro-Slot GS ist,
• wobei der erste Mini-Slot RTS_{n,i}, Meldungen vom Typ RTS transportiert und der zweite Mini-Slot CTS_{n,i}, Meldungen vom Typ CTS transportiert,
• wobei der "i"-te Slot eines jeden Makro-Slots GS auf dem "n"-ten Signalisierungskanal SIG zum Austausch von RTS-/CTS-Reservierungs-Signalisierung zwecks Zugang zum "d"-ten Datakanal verwendet wird, so dass die Gleichung " d= (n-1)*P+i" zutrifft,
• wobei auf den DATA-Kanälen der Rahmen "S+1" DATA-Makro-Slots und einen letzten ACK-Quittierungs-Slot S(ACK) enthält,
• wobei jeder der DATA-Makro-Slots seinerseits aus "P" DATA-Slots besteht.

18. Rahmen nach Anspruch 17, **dadurch gekennzeichnet, dass** er in Mehrfachrahmen unterteilt ist und von "Ns+Nd" unterschiedlichen Funkkanälen (Frequenz, Code usw.) unterstützt wird: "Ns" SIG-Kanäle (Signalisierung) und "Nd" DATA-Kanäle (Daten), wobei "Nd" ein Vielfaches von "Ns" ist: "Nd=P*Ns",
• wobei ein Signalisierungsrahmen in "M+1" (M >= 0) Mini-Signalisierungsrahmen unterteilt ist, wobei der letzte Mini-Rahmen MF (M+1) obligatorisch ist und die Form des Rahmens von Anspruch 17 übernimmt,
• wobei auf den SIG-Kanälen jeder der "M" ersten Mini-Signalisierungsrahmen MF aus "S+2" Makro-Slots GS besteht: "S+1" Makro-Slots zur Signalisierung von RTS/CTS GS(RTS/CTS) und einem letzten Makro-Slot zur Signalisierung von P-ACK, GS(P-ACK),
• wobei jeder der "S+1" Slots zur Signalisierung von RTS/CTS aus "P" Slots besteht, und jeder der "P" Slots seinerseits aus zwei Mini-Slots, MS1=RTSₙ,ᵢ, MS2=CTS_{n,i} besteht, wobei n die Nummer des Signalisierungskanals ist und i die Nummer oder Position des Slots in einem Makro-Slot ist, wobei der erste Mini-Slot RTS_{n,i} Meldungen vom Typ RTS transportiert und der zweite Mini-Slot CTS_{n,i} Meldungen vom Typ CTS transportiert,
• wobei der Makro-Slot zur Signalisierung von P-ACK GS(P-ACK_{n,i}) aus "P" Slots besteht, welche Meldungen vom Typ P-ACK transportieren und aus einem letzten, nicht benutzten Slot Sn, wobei der letzte Mini-Rahmen MF(M+1) die Konstruktion der "M" ersten Rahmen übernimmt, mit Ausnahme des letzten Makro-Slots, welcher nur einen nicht benutzten Slot [Sn, MF(M+1)] enthält,
• wobei der "i"-te Slot eines jeden Makro-Slots GS eines jeden Mini-Rahmens auf einem "n"-ten SIG-Kanal zum Austausch von RTS-/CTS-Reservierungs-Signalisierung zwecks Zugang zum "d"-ten Kanal DATA verwendet wird, so dass die Gleichung " d= (n-1)*P+i" zutrifft,
• wobei der "i"-te Slot des letzten Makro-Slots P-ACK, GS(P-ACK_{n,i}) eines jeden Mini-Rahmens MF auf einem "n"-ten SIG-Kanal eine P-ACK-Meldung beinhaltet, welche dem DATA-Kanal "d" entspricht, so dass die Gleichung " d= (n-1)*P+i" zutrifft,
• wobei ein Rahmen ebenfalls "M+1" (M >= 0) Mini-Rahmen MF enthält,
• wobei der letzte Mini-Rahmen genau die Form des DATA-Rahmens nach Anspruch 17 übernimmt,
• wobei jeder der "M" ersten Mini-Datenrahmen MF aus "S+2" Makro-Slots besteht: "S+1" DATA-Makro-Slots, und einem letzten Makro-Slot zur Signalisierung von ACK,
• wobei jeder der "S+1" DATA-Makro-Slots aus P DATA-Slots besteht, wobei der Makro-Slot zur Signalisierung von ACK aus "P" nicht benutzten Slots Sn und einem letzten ACK-Slot besteht, welcher Meldungen vom Typ ACK beinhaltet,
• wobei der letzte Mini-Rahmen MF(M+1) die Konstruktion der "M" ersten übernimmt mit Ausnahme des letzten Makro-Slots [GS(M+1), ACK], welcher jetzt nur einen einzigen ACK-Slot enthält, welcher Meldungen vom Typ ACK beinhaltet.

19. Rahmen nach Anspruch 17, **dadurch gekennzeichnet, dass** er durch 'Ns' SIG-Kanäle und 'Nd' DATA-Kanäle, welche sich voneinander unterscheiden, unterstützt wird, mit einer Validierung des RTS und dadurch, dass auf den Signalisierungskanälen SIG jeder Slot s der Makro-Signalisierungs-Slots GS aus drei Mini-Slots besteht: einem ersten Mini-Slot MS1, welcher RTS-Meldungen beinhaltet, einem zweiten Mini-Slot MS2, welcher CTS-Meldungen beinhaltet und einem dritten Mini-Slot MS3, welcher eine Meldung vom Typ CAC beinhaltet.

20. Rahmen nach Anspruch 18, **dadurch gekennzeichnet, dass** der Rahmen eine Mehrfachrahmenstruktur besitzt und dadurch, dass:
• jeder Signalisierungs-Slot der "S+1" ersten Makro-Slots eines jeden Mini-Rahmens jetzt aus drei Mini-Slots besteht: einem ersten Mini-Slot, welcher RTS-Meldungen beinhaltet, einem zweiten Mini-Slot, welcher CTS-Meldungen beinhaltet und einem dritten Mini-Slot, welcher eine Meldung vom Typ CAC beinhaltet,
• wobei der letzte Makro-Slot S+2 der M ersten Mini-Signalisierungsrahmen aus 2P+1 Slots besteht: P P-CAC-Slots, P P-ACK-Slots und einem letzten, nicht benutzten Slot,
• wobei der letzte Makro-Slot S+2 der M ersten Mini-Signalisierungsrahmen 2P+1 Slots enthält: 2P Slots, die nicht benutzt werden und einen letzten ACK-Slot.

## Claims

1. Method for accessing a radio channel in a communication system comprising a plurality of terminals (10n) communicating with one another by radio links, a terminal (10n) being equipped with transmission and/or reception means (11n, 12n), a processor (13n) adapted for executing the steps of the method, said method using an access protocol based on a communication frame (F) made up of a plurality of slots S(1), .., S(S+2), the first S slots each comprising two mini-slots, the first mini-slot MS1 comprising a request to send data signalling message RTS or data, the second mini-slot MS2 comprising a "ready to receive" signalling message, CTS, or data, the slot (S+1) containing a message of RTS type or data, the slot (S+2) containing a message of CTS type and an acknowledgement message placed at the end of the frame in order to acknowledge one or more transmissions taking place on the radio channel.

2. Method for accessing a radio channel according to claim 1, **characterized in that** a frame F is divided into (M+1) mini-frames MF, each mini-frame MF having the structure of the frame of claim 1 and for the first M mini-frames, the first mini-slot MS1 of the slot (S+2) contains a CTS message or a partial acknowledgement message P-ACK.

3. Method for accessing a radio channel according to claim 1, implemented in a communication system comprising a plurality of terminals (10n) communicating with one another by radio links, a terminal (10n) being equipped with transmission means and/or reception means (11n, 12n), a processor (13n) configured for executing the steps of the method according to claim 1, **characterized in that** it implements at least one signalling channel SIG distinct from a data channel DATA, that it uses an access protocol based on a communication frame (F) made up of a plurality of slots S(1), .., S(S+2), the SIG channel taking up the RTS signalling mini-slots, [MS1, SIG] and CTS [MS2, SIG] organized in S+1 slots, the DATA channel taking up the S+1 data slots DATA, [S, DATA], and the last ACK slot S+2 of the DATA channel, the last slot S+2 on the SIG channel is not used, the S+1 signalling slots of the SIG channel corresponding to the S+1 data slots of the DATA channel, the unused last slot on the signalling channel SIG corresponding to the ACK slot of the DATA channel.

4. Method for accessing a radio channel according to claim 3, **characterized in that** it uses at least one signalling channel distinct from a data channel, and **in that** a frame is divided into (M+1) mini-frames MF and **in that** the last mini-frame MF(M+1) has the structure of the frame of claim 3, and **in that**:
• for the SIG channel, the first M mini-frames are used, each made up of (S+2) slots, the (S+1) slots being each made up of a mini-slot for the RTS messages and a mini-slot for the CTS messages, the last slot contains a mini-slot for the partial acknowledgement messages P-ACK and a neutralized mini-slot,
• on the DATA channel, the first M mini-frames are used, each made up of S+2 slots, the S+1 first slots are for data messages, the last slot S+2 is made up of a neutralized mini-slot and a mini-slot for the acknowledgement messages ACK.

5. Method according to claim 3, **characterized in that** the frame F on the signalling channel SIG is made up of, at the level of the first "S+1" slots, three mini-slots distributed as follows: a first mini-slot MS1 for the sending of the RTS messages, a second mini-slot MS2 for the sending of the messages of CTS type, and a third mini-slot MS3 for the sending of the messages of CAC type.

6. Method according to claim 4, **characterized in that** it uses a frame made up, at the level of the first "S+1" slots of each mini-frame MF on the signalling channel, of three mini-slots distributed as follows: a first mini-slot MS1 for the sending of the RTS messages, a second mini-slot MS2 for the sending of the messages of CTS type, a third mini-slot MS3 for the sending of the messages of CAC type, the last slot (S+2) of the first M mini-frames on the signalling channel SIG is modified to contain three mini-slots: the first [MS1(S+2), SIG] for the sending of the messages of P-CAC type, the second [MS2(S+2), SIG] for the sending of the messages of P-ACK type, and the third mini-slot [MS3(S+2), SIG] unused, the last slot S+2 of the first M mini-frames on the data channel DATA is modified to contain three mini-slots: the first two mini-slots are not used MS1, MS2, and the third mini-slot [MS3(S+2), DATA] is reserved for the sending of the ACK messages.

7. Method according to claim 3, **characterized in that** a frame F is used that is supported by "Ns+Nd" radio channels that are distinct (frequency, code, etc.): "Ns" SIG channels and "Nd" DATA channels, in which "Nd" is a multiple of "Ns": "Nd=P*Ns",
• on the SIG channels, the frame contains "S+1" RTS/CTS signalling macro-slots and an unused last slot, each of the signalling macro-slots is made up of "P" slots, and each slot is itself made up of two mini-slots,
• the first mini-slot transports messages of RTS type and the second mini-slot transports messages of CTS type,
• the "i"th slot of each macro-slot on the "n"th signalling channel is used for the exchange of RTS/CTS reservation signalling for accessing the "d"th data channel such that "d= (n-1)*P+i",
• on the DATA channels, the frame contains "S+1" DATA macro-slots and a last acknowledgement slot ACK, each of the DATA macro-slots is itself made up of "P" DATA slots.

8. Method according to claim 7, **characterized in that** a frame is used that is supported by "Ns+Nd" radio channels that are distinct (frequency, code, etc.): "Ns" SIG (signalling) channels and "Nd" DATA (data) channels, in which "Nd" is a multiple of "Ns": "Nd=P*Ns",
• on the SIG channels, the frame is divided into "M+1" (M >= 0) mini-frames, the last mini-frame takes on the exact form of the SIG frame of claim 7,
• on the SIG channels, each of the first "M" mini-frames is made up of "S+2" macro-slots: "S+1" RTS/CTS signalling macro-slots and a last P-ACK signalling macro-slot, each of the "S+1" RTS/CTS signalling macro-slots is made up of "P" slots, and each of the "P" slots is itself made up of two mini-slots,
• the first mini-slot transports messages of RTS type and the second mini-slot transports messages of CTS type, the P-ACK signalling macro-slot is made up of "P" slots which transport messages of P-ACK type and an unused last slot,
• the "i"th slot of each macro-slot of each mini-frame on the "n"th SIG channel is used for the exchange of RTS/CTS reservation signalling to access the "d"th DATA channel such that "d= (n-1)*P+i",
• the "i"th slot of the last P-ACK macro-slot of each mini-frame on the "n"th SIG channel is used for the sending of P-ACK messages corresponding to the DATA channel "d", such that "d= (n-1)*P+i",
• on the DATA channels, the frame also contains "M+1" (M >= 0) mini-frames, the last mini-frame takes on the form of the DATA frame of claim 7,
• on the DATA channels, each of the first "M" mini-frames is made up of "S+2" macro-slots: "S+1" DATA macro-slots and a last ACK signalling macro-slot,
• each of the "S+1" DATA macro-slots is made up of P DATA slots, the ACK signalling macro-slot is made up of "P" unused slots and a last ACK slot to transport messages of ACK type, the last mini-frame takes on the form of the DATA frame of claim 7.

9. Method according to claim 7, **characterized in that**, for the frame on the SIG channels, each slot of the macro-slots is made up of three mini-slots: a first mini-slot for the sending of the RTS messages, a second mini-slot for the sending of the CTS messages, and a third mini-slot for the sending of a message of CAC type.

10. Method according to claim 8, **characterized in that** the frame is modified on the signalling channels in such a way that each slot of the first "S+1" macro-slots of each mini-frame on the signalling channels is now made up of three mini-slots: a first mini-slot for the sending of the RTS messages, a second mini-slot for the sending of the CTS messages, and a third mini-slot for the sending of a message of CAC type, the last macro-slot (S+2) of the first M mini-frames on the SIG channels is now made up of 2P+1 slots: P P-CAC slots, P P-ACK slots, and an unused last slot, the last macro-slot (S+2) of the first M mini-frames MF on the DATA channels is modified to contain 2P+1 slots: 2P unused slots and a last ACK slot.

11. Frame for use in a synchronous network with TDMA access, comprising a number "S+2" of slots, its structure comprising at least the following elements:
• the first "S" slots each contain two mini-slots MS1(s), MS2(s), the first mini-slot MS1(s) contains a signalling message of RTS type or data, the second mini-slot MS2(s) contains a CTS signalling message or data,
• the first mini-slot MS1 (S+1) of the slot "S+1" contains an RTS message or data,
• the second mini-slot MS2(S+1) contains data,
• the first mini-slot MS1(S+2) of the slot "S+2" contains a message of CTS type,
• the second mini-slot MS2(S+2) contains an acknowledgement signalling message of ACK type.

12. Frame according to claim 11, **characterized in that** it further comprises the following elements:
• the frame is divided into "M+1" (M >= 0) mini-frames MF(f),
• the last mini-frame MF(F+1) takes on the exact form of the frame of claim 11,
• the first "S" slots of each mini-frame MF each contain two mini-slots MS1, MS2,
• the first mini-slot MS1(s) of each slot s contains a signalling message of RTS type, or data,
• the second mini-slot MS2(s) of each slot s contains a signalling message of CTS type, or data,
• the first mini-slot of the slot "S+1" of each mini-frame [MS1(S+1), MF] contains an RTS message or data,
• the second mini-slot [MS2(S+1), MF] contains data,
• the last slot "S+2" of a mini-frame MF is defined as follows:
• in the first "M" mini-frames: the first mini-slot of the slot "S+2", MS1(S+2) of each mini-frame MF contains signalling messages of CTS or P-ACK (partial ACK) type, the second mini-slot "S+2", MS2(S+2), contains an acknowledgement signalling message of ACK type,
• in the last mini-frame MF(F+1): the first mini-slot [MS1(S+2), MF(F+1)] of the slot "S+2" contains a message of CTS type, the second mini-slot [MS2(S+2), MF(F+1)] contains an acknowledgement signalling message of ACK type.

13. Frame according to claim 11, intended to be used in a synchronous network with TDMA access implementing at least one signalling channel SIG distinct from a data channel DATA, **characterized in that** it comprises at least the following elements:
• the frame is supported by two radio channels that are distinct, a signalling channel SIG and a data channel DATA distinct from the signalling channel,
• the SIG channel takes up the RTS and CTS signalling mini-slots organized in S+1 slots, the last slot S+2 on the SIG channel is not used,
• the DATA channel takes up the S+1 data slots DATA and the acknowledgement slot ACK,
• the S+1 signalling slots of the SIG channel correspond to the S+1 data slots of the DATA channel, the unused last slot on the SIG channel corresponds to the ACK slot of the DATA channel.

14. Frame according to claim 13, **characterized in that** it comprises at least the following elements:
• the frame F is divided into M+1 mini-frames MF(1),.., MF(M+1) on a signalling channel and a data channel that are distinct from one another, with M being greater than or equal to zero,
• the last mini-frame MF(M+1) takes on the exact form of the frame according to claim 12,
• the signalling channel SIG takes up the RTS, CTS and P-ACK signalling slots, the data channel DATA takes up the data slots and the ACK slots,
• on the signalling channel SIG, the first "M" mini-frames MF are each made up of S+2 slots,
• the first "S+1" slots are each made up of a mini-slot for the RTS messages, [MS1, MF, SIG] and a mini-slot for the CTS messages, [MS2, MF, SIG],
• the last slot (S+2) contains a first mini-slot [MS1(S+2), MF, SIG] for the partial acknowledgement messages P-ACK and a neutralized (unused) second mini-slot [MS2(S+2), SIG], [MSn, MF(M+1)],
• the last mini-frame MF+1 takes on the exact form of the frame of the SIG channel of claim 12 except for the last slot which contains only a neutralized mini-slot,
• on the DATA channel, the first "M" mini-frames are each made up of "S+2" slots,
• the first "S+1" slots are for the data messages DATA, whereas the last slot of a mini-frame is made up of a neutralized mini-slot MSn(S+2) and a mini-slot MSa(S+2) for the acknowledgement messages ACK.

15. Frame according to claim 13, **characterized in that**, for the frame on the signalling channel, each slot of the first "S+1" signalling slots is made up of three mini-slots: a first mini-slot MS1 for the sending of the RTS messages, a second mini-slot MS2 for the sending of the CTS messages, and a third mini-slot MS3 for the sending of the messages of channel access confirmation or CAC type.

16. Frame according to claim 14, **characterized in that** the frame comprises M+1 (M>=0) mini-frames:
• each slot of the first "S+1" slots of each mini-frame is made up of three mini-slots: a first mini-slot MS1 for the sending of the RTS messages, a second mini-slot MS2 for the sending of the CTS messages, and a third mini-slot MS3 for the sending of a message of CAC type,
• the last slot S+2 of the first M mini-frames on the SIG channel is modified to contain three mini-slots: the first for the sending of the messages of P-CAC type, the second for the sending of the messages of P-ACK type, and an unused third mini-slot,
• the last slot S+2 of the first M mini-frames on the data channel DATA is modified to contain three mini-slots: the first two mini-slots are not used, and the third mini-slot is reserved for the sending of the ACK messages.

17. Frame according to claim 13, **characterized in that** it is supported by Ns signalling channels and by Nd data channels, where "Nd" is a multiple of "Ns": "Nd=P*Ns",
• the frame contains "S+1" RTS/CTS signalling macro-slots, [GS, SIG] and an unused last slot Sn(S+2), each of the signalling macro-slots [GS, SIG] is made up of "P" slots, and each slot is itself made up of two mini-slots RTS_{n, i}, CTS_{n,i} with n being the channel number and i the slot number in a macro-slot GS,
• the first mini-slot RTS_{n, i} transports messages of RTS type and the second mini-slot CTS_{n, i} transports messages of CTS type,
• the "i"th slot of each macro-slot GS on the "n"th signalling channel SIG is used for the exchange of RTS/CTS reservation signalling for accessing the "d"th data channel such that "d= (n-1)*P+i",
• on the DATA channels, the frame contains "S+1" DATA macro-slots and a last acknowledgement slot ACK S(ACK),
• each of the DATA macro-slots is itself made up of "P" DATA slots.

18. Frame according to claim 17, **characterized in that** it is divided into multi-frames and supported by "Ns+Nd" radio channels that are distinct (frequency, code, etc.): "Ns" SIG (signalling) channels and "Nd" DATA (data) channels, where "Nd" is a multiple of "Ns": "Nd=P*Ns",
• a signalling frame is divided into "M+1" (M >= 0) signalling mini-frames, the last mini-frame MF (M+1) is mandatory and takes on the form of the frame of claim 17,
• on the SIG channels, each of the first "M" signalling mini-frames MF is made up of "S+2" macro-slots GS: "S+1" RTS/CTS signalling macro-slots GS(RTS/CTS) and a last P-ACK signalling macro-slot, GS(P-ACK),
• each of the "S+1" RTS/CTS signalling macro-slots is made up of "P" slots, and each of the "P" slots is itself made up of two mini-slots, MS1=RTS_{n,i}, MS2=CTS_{n,i} with n being the signalling channel number and i the number or position of the slot in a macro-slot, the first mini-slot RTS_{n,i} transports messages of RTS type and the second mini-slot CTS_{n,i} transports messages of CTS type,
• the P-ACK signalling macro-slot GS(P-ACK_{n,i}) is made up of "P" slots which transport messages of P-ACK type and an unused last slot Sn, the last mini-frame MF(M+1) takes on the construction of the first "M" frames except for the last macro-slot which contains only a single unused slot [Sn, MF(M+1)],
• the "i"th slot of each macro-slot GS of each mini-frame MF on an "n"th SIG channel is used for the exchange of RTS/CTS reservation signalling for accessing the "d"th DATA channel such that "d= (n-1)*P+i",
• the "i"th slot of the last P-ACK macro-slot, OS(P-ACK_{n,i}) of each mini-frame MF on an "n"th SIG channel is comprises a P-ACK message corresponding to the DATA channel "d" such that "d= (n-1)*P+i",
• a frame also contains "M+1" (M >= 0) mini-frames MF,
• the last mini-frame takes on the exact form of the DATA frame of claim 17,
• each of the first "M" data mini-frames MF is made up of "S+2" macro-slots: "S+1" DATA macro-slots and a last ACK signalling macro-slot,
• each of the "S+1" DATA macro-slots is made up of P DATA slots, the ACK signalling macro-slot is made up of "P" unused slots Sn and a last ACK slot comprising messages of ACK type,
• the last mini-frame MF(M+1) takes on the construction of the first "M" except for the last macro-slot [GS(M+1), ACK] which now contains only a single ACK slot comprising messages of ACK type.

19. Frame according to claim 17, **characterized in that** it is supported by 'Ns' SIG channels and 'Nd' DATA channels that are distinct from one another with a validation of the RTS and **in that**, on the signalling channels SIG, each slot s of the signalling macro-slots GS is made up of three mini-slots: a first mini-slot MS1 comprising RTS messages, a second mini-slot MS2 comprising CTS messages, and a third mini-slot MS3 comprising a message of CAC type.

20. Frame according to claim 18, **characterized in that** the frame has a multi-frame structure and **in that**:
• each signalling slot of the first "S+1" macro-slots of each mini-frame is now made up of three mini-slots: a first mini-slot comprising RTS messages, a second mini-slot comprising CTS messages, and a third mini-slot comprising a message of CAC type,
• the last macro-slot S+2 of the first M signalling mini-frames is made up of 2P+1 slots: P P-CAC slots, P P-ACK slots, and an unused last slot,
• the last macro-slot S+2 of the first M signalling mini-frames contains 2P+1 slots: 2P unused slots and a last ACK slot.
